(19) Europäisches Patentamt
European Patent Office
Office européen des brevets

(11) **EP 2 755 262 A1**

(12) **EUROPEAN PATENT APPLICATION**
published in accordance with Art. 153(4) EPC

(43) Date of publication:
**16.07.2014 Bulletin 2014/29**

(51) Int Cl.:
**H01M 4/587** (2010.01)  **C01B 31/02** (2006.01)
**H01M 4/36** (2006.01)

(21) Application number: **12830219.7**

(22) Date of filing: **07.09.2012**

(86) International application number:
**PCT/JP2012/072966**

(87) International publication number:
**WO 2013/035859 (14.03.2013 Gazette 2013/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.09.2011 JP 2011197491**
**22.09.2011 JP 2011207543**
**30.09.2011 JP 2011218311**

(71) Applicant: **Sumitomo Bakelite Company Limited**
**Shinagawa-ku**
**Tokyo 140-0002 (JP)**

(72) Inventors:
• **SASAKI, Tatsuro**
**Tokyo 140-0002 (JP)**
• **ICHIKAWA, Yuichi**
**Tokyo 140-0002 (JP)**

(74) Representative: **Ter Meer Steinmeister & Partner**
**Patentanwälte**
**Mauerkircherstrasse 45**
**81679 München (DE)**

(54) **CARBON MATERIAL FOR LITHIUM ION SECONDARY BATTERIES, NEGATIVE ELECTRODE MATERIAL FOR LITHIUM ION SECONDARY BATTERIES, AND LITHIUM ION SECONDARY BATTERY**

(57) A carbon material for a lithium ion secondary battery according to the present invention is a carbon material for a lithium ion secondary battery. The carbon material for the lithium ion secondary battery contains a graphite as a major component of the carbon material and a hard carbon. When an amount of the graphite contained in the carbon material is defined as "A" [wt%] and an amount of the hard carbon contained in the carbon material is defined as "B" [wt%], "A" and "B" satisfy a relationship of $1.2 \leq A/B \leq 19$ and the amount of the graphite contained in the carbon material is in the range of 55 to 95 wt%. This makes it possible to provide the carbon material for the lithium ion secondary battery, the negative electrode material for the lithium ion secondary battery and the lithium ion secondary battery, which can provide high charge-discharge capacity and superior charge-discharge efficiency in good balance. Further, the amount of the hard carbon contained in the carbon material is preferably in the range of 5 to 45 wt%.

FIG. 2

**Description**

**BACKGROUND OF THE INVENTION**

The present invention relates to a carbon material for a lithium ion secondary battery, a negative electrode material for a lithium ion secondary battery and a lithium ion secondary battery.

Conventionally, a carbon material is used as a constituent material (negative electrode material) for a negative electrode of a lithium ion secondary battery. This is because dendrites of lithium are not likely to deposit on the negative electrode formed of the carbon material even if charge-discharge cycles are repeated, and hence it is possible to ensure stability of the lithium ion secondary battery.

Graphite is typically used as the carbon material for the negative electrode because the negative electrode formed of the graphite leads to improve charge-discharge efficiency of the lithium ion battery (for example, see patent document 1). However, there are some disadvantages of using the graphite as the negative electrode material. One of the disadvantages is that charge-discharge capacity of the lithium ion secondary battery significantly reduces after repeated charge-discharge cycles. In addition, it is difficult to add input-output characteristics at high current to the lithium ion secondary battery.

As a carbon material for solving the above charge-discharge characteristics problems, hard carbon (non-graphitizable carbon) obtained by sintering a polymeric material in which a graphite crystalline structure is not likely to grow has been developed (for example, see patent document 2).

In a case where the hard carbon is used as the negative electrode material, it is possible to improve the stability during the repeated charge-discharge cycles and the input-output characteristics at high current of the lithium ion secondary battery. On the other hand, there is a problem that it is difficult to sufficiently ensure the charge-discharge efficiency of the lithium ion secondary battery.

**PRIOR ART DOCUMENT**

PATENT **DOCUMENT**

      Patent document 1: JP H05-74457A
      Patent document 2: JP 2006-083012A

**SUMMARY OF THE INVENTION**

It is an object of the present invention to provide a carbon material for a lithium ion secondary battery, a negative electrode material for a lithium ion secondary battery and a lithium ion secondary battery, which can provide high charge-discharge capacity and superior charge-discharge efficiency in good balance.

The above object is achieved by the present invention which is specified in any one of the following (1) to (9).

      (1) A carbon material for a lithium ion secondary battery, comprising:

           a graphite as a major component of the carbon material; and
           a hard carbon,
           wherein when an amount of the graphite contained in the carbon material is defined as "A" [wt%] and an amount of the hard carbon contained in the carbon material is defined as "B" [wt%], "A" and "B" satisfy a relationship of $1.2 \leq A/B \leq 19$ and the amount of the graphite contained in the carbon material is in the range of 55 to 95 wt%.

      (2) The carbon material for the lithium ion secondary battery described above (1), wherein the amount of the hard carbon contained in the carbon material is in the range of 5 to 45 wt%.

      (3) The carbon material for the lithium ion secondary battery described above (1), wherein the carbon material is formed of a plurality of particles, and
      wherein when a volume-based cumulative distribution curve of the particles forming the carbon material is obtained by accumulating the particles from the particle having the smallest volume and then a particle size of the particle being at a 5% accumulation point on the cumulative distribution curve is defined as "D5", a particle size of the particle being at a 50% accumulation point on the cumulative distribution curve is defined as "D50" and a particle size of the particle being at a 95% accumulation point on the cumulative distribution curve is defined as "D95", "D50" is in the range of 1.0 to 50 $\mu$m and "D50" and "D95" satisfy a relationship of $2.0 \leq D95/D5 \leq 30$.

(4) The carbon material for the lithium ion secondary battery described above (3), wherein each of the graphite and the hard carbon is formed of a plurality of particles, and
wherein when volume-based cumulative distribution curves of the particles respectively forming the graphite and the hard carbon are obtained by accumulating the particles from the particle having the smallest volume, a particle size of the particle forming the graphite and being at a 50% accumulation point on the cumulative distribution curve is in the range of 5 to 50 $\mu$m and a particle size of the particle forming the hard carbon and being at 50% accumulation point on the cumulative distribution curve is in the range of 1 to 50 $\mu$m.

(5) The carbon material for the lithium ion secondary battery described above (1), wherein the carbon material is constituted of a porous body having pores including mesopores and macropores,
wherein a volume ratio of a sum of a total volume of the mesopores of the porous body and a total volume of the macropores of the porous body relative to a total volume of the pores of the porous body is in the range of 80 to 98%, and
wherein a volume of the macropores per unit weight of the porous body is in the range of 0.005 to 0.030 ml/g.

(6) The carbon material for the lithium ion secondary battery described above (5), whrein a volume of the mesoprous per unit weight of the porous body is in the range of 0.001 to 0.025 ml/g.

(7) The carbon material for the lithium ion secondary battery described above (1), wherein a positron lifetime of the hard carbon measured by a positron annihilation method under the following conditions (A) to (E) is in the range of 370 to 480 picoseconds, and

(A) positron source: a positron is generated from electron-positron pair with an electron accelerator.
(B) gamma-ray detector: a $BaF_2$-scintillator detector and a photomultiplier are used as the gamma-ray detector.
(C) measurement temperature and atmosphere: a measurement temperature is 25 °C and atmosphere is vacuum state.
(D) count number of annihilation gamma-rays: a count number of annihilation gamma-rays is equal to or larger than $3 \times 10^6$.
(E) energy of positron beam: energy of positron beam is 10 keV.
wherein a half-value width of a peak of the carbon material obtained by X-ray photoelectron spectroscopy (XPS) method and existing in the vicinity of 285 eV is in the range of 0.8 eV to 1.8 eV.

(8) A negative electrode material for a lithium ion secondary battery, comprising:
the carbon material for the lithium ion secondary battery described above (1).

(9) A lithium ion secondary battery, comprising:
a negative electrode containing the negative electrode material described above (8).

## EFFECT OF THE INVENTION

According to the present invention, it is possible to provide a carbon material for a lithium ion secondary battery, a negative electrode material for a lithium ion secondary battery and a lithium ion secondary battery, which can provide high charge-discharge capacity and superior charge-discharge efficiency in good balance.

## BRIEF DESCRIPTION OF THE DRAWINGS

Fig. 1 is a graph showing a relationship between the count number of annihilated gamma-rays and extinction time of positron.
Fig. 2 is a schematic view showing a lithium ion secondary battery.

## DETAILED DESCRIPTION OF THE PREFFERED EMBODIMENT

Hereinafter, a carbon material for a lithium ion secondary battery, a negative electrode material for a lithium ion secondary battery and a lithium ion secondary battery according to the present invention will be described below with reference to the accompanying drawings.

«Carbon material for lithium ion secondary battery»

Description will be first given to the carbon material for the lithium ion secondary battery (hereinafter, it is sometimes referred to as "carbon material" simply).

The carbon material for the lithium ion secondary battery according to the present invention contains graphite as a major component thereof and a hard carbon.

Conventionally, the graphite is used as a carbon material for a lithium ion secondary battery because it leads to improve charge-discharge efficiency of the lithium ion secondary battery. However, there are some disadvantages of using the graphite as a constituent material (negative electrode material) for a negative electrode of the lithium ion secondary battery. One of the disadvantages is that charge-discharge capacity of the lithium ion secondary battery significantly reduces after repeated charge-discharge cycles. In addition, it is difficult to add input-output characteristics at high current to the lithium ion secondary battery.

As a carbon material for solving the above charge-discharge characteristics problems, a hard carbon (non-graphitizable carbon) obtained by sintering a polymeric material in which a graphite crystalline structure is not likely to grow has been developed.

In a case where only the hard carbon is used as the negative electrode material, it is possible to improve the stability during the repeated charge-discharge cycles and the input-output characteristics at high current of the lithium ion secondary battery. On the other hand, there is a problem that it is difficult to sufficiently ensure the charge-discharge efficiency (charge efficiency and discharge efficiency) of the lithium ion secondary battery.

In contrast, in the present invention, the carbon material containing the graphite as the major component thereof and the hard carbon as an additive to the graphite is used for the negative electrode material for the lithium ion secondary battery. This makes it possible to improve the stability and the characteristics at high current with keeping the same charge-discharge efficiency as that of the case where only the graphite is used as the negative electrode material, namely, with preventing significant deterioration of the charge-discharge efficiency. As a result, it is possible to provide the lithium ion secondary battery which can provide high charge-discharge capacity and superior charge-discharge efficiency in good balance.

Hereinafter, description will be given to each component of the carbon material in detail.

[Graphite]

Graphite is one of carbon isotopes and a hexagonal crystal system material (hexagonal plate-like crystal) formed of layer lattices in which six-membered carbocyclic rings are stacked in layers.

In a case where only the graphite is used as the negative electrode, it is possible to improve the charge-discharge efficiency of the lithium ion secondary battery. However, there are problems of using the graphite as the negative electrode. One of the problems is that the charge-discharge capacity of the lithium ion secondary battery significantly reduces after the repeated charge-discharge cycles. Another of the problems is that it is difficult to add the input-output characteristics at high current to the lithium ion secondary battery.

In order to address the above problems, the hard carbon described later in detail is added to the graphite. This makes it possible to improve the stability during the repeated charge-discharge cycles and the input-output characteristics at high current with improving the charge-discharge efficiency of the lithium ion secondary battery, in other words, with preventing the deterioration of the charge-discharge efficiency.

An amount of the graphite contained in the carbon material for the lithium ion secondary battery is preferably in the range of 55 to 95 wt%, and more preferably in the range of 60 to 85 wt%. By setting the amount of the graphite to be within the above range, it is possible to improve the stability during the repeated charge-discharge cycles and the charge-discharge efficiency with keeping the charge-discharge efficiency of the lithium ion secondary battery high. If the amount of the graphite is smaller than the above lower limit, there is a case where the charge-discharge efficiency is not sufficiently improved depending on compositions of electrolysis solution, a cell structure of the lithium ion secondary battery and the like. On the other hand, even if the amount of the graphite is larger than the above upper limit, it is not expected to further improve the stability of the lithium ion secondary battery during the repeated charge-discharge cycles and the input-output characteristics at high current.

[Hard carbon]

A hard carbon (non-graphitizable carbon) is a material obtained by sintering a polymeric material in which a graphite crystalline structure is not likely to grow. In other words, the hard carbon is a material obtained by carbonizing a resin material or a resin composition. Such a hard carbon is an amorphous material. A concept of the term "amorphous" includes an aggregation of microcrystals.

The hard carbon can provide high stability of the lithium ion secondary battery during the repeated charge-discharge cycles and easily perform high current input-output with respect to the lithium ion secondary battery. However, in a case where only the hard carbon is used as the negative electrode material, there is a problem that it is difficult to sufficiently ensure the charge-discharge efficiency of the lithium ion secondary battery.

In contrast, in the carbon material for the lithium ion secondary battery according to the present invention, by adding the hard carbon having the above characteristics as the addictive to the graphite which is the major component of the carbon material, it is possible to improve the stability and the input-output characteristics at high current as well as the charge-discharge efficiency of the lithium ion secondary battery.

An amount of the hard carbon contained the carbon material for the lithium ion secondary battery is preferably in the range of 5 to 45 wt%, and more preferably in the range of 15 to 40 wt%. By setting the amount of the hard carbon to be within the above range, it is possible to efficiently improve the stability of the lithium ion secondary battery during the repeated charge-discharge cycles and the input-output characteristics at high current without the deterioration of the superior charge-discharge efficiency of the lithium ion secondary battery.

In particular, when the amount of the graphite contained in the carbon material is defined as "A" [wt%] and the amount of the hard carbon contained in the carbon material is defined as "B" [wt%], "A" and "B" preferably satisfy a relationship of $1.2 \leq A/B \leq 19$, and more preferably satisfy a relationship of $1.5 \leq A/B \leq 5$. By setting "A" and "B" to satisfy the above relationship, it is possible to more efficiently improve the stability of the lithium ion secondary battery during the repeated charge-discharge cycles and the input-output characteristics at high current without the deterioration of the charge-discharge efficiency of the lithium ion secondary battery.

The resin or the resin contained in the resin composition used as a raw material for the hard carbon is not particularly limited to a specific material. Examples of the raw material include a thermosetting resin; a thermoplastic resin; petroleum-based tar and pitch which are obtained as by-products at the time of manufacturing ethylene; coal tar obtained at the time of destructive distillation of petroleum oil; pitch or heavy components obtained by distilling coal tar and removing low-boiling components from the coal tar; petroleum-based or coal-based tar or pitch such as tar and pitch obtained by liquefying coal; compositions obtained by crosslinking the above tar or pitch and a combination of one or more of the above materials.

As described below, the resin composition may contain a curing agent, an additive and the like in addition to the above resin as the major component thereof. Further, the resin composition may be appropriately treated such as a crosslinking treatment due to oxidization and the like.

The thermosetting resin is not particularly limited to a specific material. Examples of the thermosetting resin include a phenolic resin such as a novolac-type phenolic resin and a resol-type phenolic resin; an epoxy resin such as a bisphenol-type epoxy resin and a novolac-type epoxy resin; a melamine resin; an urea resin; an aniline resin; a cyanate resin; a furan resin; a ketonic resin; an unsaturated polyester resin and an urethane resin. Further, a modified composition obtained by modifying one or more of the above resins with various compositions may be used as the thermosetting resin.

The thermoplastic resin is not particularly limited to a specific material. Examples of the thermoplastic resin include polyethylene; polystyrene; polyacrylonitrile; an acrylonitrile-styrene (AS) resin; an acrylonitrile-butadiane-styrene (ABS) resin; polypropylene; vinyl chloride; a methacryl resin; polyethylene terephthalate; polyamide; polycarbonate; polyacetal; polyphenylene ether; polybutylene terephthalate; polyphenylene sulfide; polysulfone; polyether sulfone; polyether ether ketone; polyetherimide; polyamideimide; polyimide and polyphthalamide.

In particular, the thermosetting resin is preferably used as the resin used as the major component of the hard carbon. This makes it possible to improve an actual carbon ratio of the hard carbon.

In particular, the thermosetting resin is preferably selected one from the group consisting of the novolac-type phenol resin, the resol-type phenolic resin, the melamine resin, the furan resin, the aniline resin and a modified composition obtained by modifying one or more of the above resins. This makes it possible to increase flexibility for design of the carbon material, thereby producing the carbon material or the lithium ion secondary battery in low cost. Further, it is possible to more improve the stability during the repeated charge-discharge cycles and the charge-discharge characteristics of the lithium ion secondary battery.

In a case of using the thermosetting resin for the hard carbon, a curing agent for the thermosetting resin may be used together.

The curing agent used together is not particularly limited to a specific material. For example, in a case of using the novolac-type phenol resin as the thermosetting resin, the curing resin to be used together with the thermosetting resin is preferably selected one from the group consisting of hexamethylenetetramine, a resol-type phenol resin, polyacetal and paraform. For another example, in a case of using the epoxy resin as the thermosetting resin, the curing agent used together with the thermosetting resin may be an existing curing agent for the epoxy resin such as a polyamine composition such as aliphatic polyamine and aromatic polyamine; an acid anhydride; an imidazole composition; dicyandiamide; a novolac-type phenol resin; a bisphenol-type phenol resin and a resol-type phenol resin.

It is noted that even in a case where an amount of the curing agent to be used together with the thermosetting resin is generally determined (designated), it is possible to use an amount of the curing agent smaller than the generally-determined amount or only the thermosetting resin without containing the curing amount in the resin composition according to this embodiment.

The resin composition used as the raw material for the hard carbon may contain an additive in addition to the above materials.

The additive for the hard carbon is not particularly limited a specific material. Examples of the additive include a carbon material precursor carbonized at a temperature in the range of 200 to 800 °C, an organic acid, an inorganic acid, a nitrogen-containing composition, an aromatic composition and a non-ferrous metal element. A combination of one or more of these additives or only one of these additives may be used for the hard carbon depending on the type or the characteristics of the resin to be used together.

The resin used as the raw material for the hard carbon may contain a nitrogen-containing resin composition, which is discussed below in detail, as a major resin component thereof. In a case where the major resin component contains no nitrogen-containing resin composition, the resin may contain at least one nitrogen-containing composition as a non-major resin component. Further, the resin may contain the nitrogen-containing resin composition as the major resin component thereof and other nitrogen-containing compositions as the non-major resin component thereof. By carbonizing such a resin, it is possible to obtain a hard carbon containing nitrogen atoms. By making the hard carbon contain the nitrogen atoms, it is possible to add superior electrical characteristics to the hard carbon (carbon material for the lithium ion secondary battery) due to electronegativity of the nitrogen atoms. This makes it possible to facilitate absorption and discharge of lithium ion due to the hard carbon, thereby adding superior charge-discharge characteristics to the lithium ion secondary battery.

Examples of the nitrogen-containing resin composition include the following nitrogen-containing thermosetting resin and nitrogen-containing thermoplastic resin.

Examples of the nitrogen-containing thermosetting resin include a melamine resin, a urea resin, an aniline resin, a cyanate resin, an urethane resin, a modified phenol resin obtained by modifying a phenol resin with a nitrogen-containing composition such as amine and a modified epoxy resin obtained by modifying an epoxy resin with the nitrogen-containing composition.

Examples of the nitrogen-containing thermoplastic resin include polyacrylonitrile, an acrylonitrile-styrene (AS) resin, an acrylonitrile-butadiene-styrene (ABS) resin, polyamide, polyetherimide, polyamideimide, polyimide and polyphthalamide.

In a case of using the nitrogen-containing composition as the non-major resin component of the raw material for the hard carbon, the nitrogen-containing composition is not particularly limited to a specific material. Examples of the nitrogen-containing composition include a curing agent for a novolac-type phenol resin such as hexamethylenetetramine; a curing agent for an epoxy resin such as aliphatic polyamine, aromatic polyamine and dicyandiamide; and other compositions containing nitrogen such as an amine composition, ammonium salt, nitrate salt and a nitro composition which have no function as a curing agent.

Only one of the above nitrogen-containing compositions and two or more of the above nitrogen-containing composition may be used whether or not the major resin component contains the nitrogen-containing resin composition.

An amount of the nitrogen contained in the resin composition or the resin used as the raw material for the hard carbon is not particularly limited a specific value, but preferably in the range of 5 to 65 wt%, and more preferably in the range of 10 to 20 wt%.

By carbonizing such a resin composition or resin, the hard carbon can be obtained. An amount of carbon (carbon atoms) contained in the hard carbon is preferably equal to or more than 95 wt% and an amount of nitrogen (nitrogen atoms) contained in the hard carbon is preferably in the range of 0.5 to 5 wt%.

By setting the amount of the nitrogen contained in the hard carbon to be equal to or more than 0.5 wt%, more particularly, equal to or more than 1.0 wt%, it is possible to add superior charge-discharge characteristics to the hard carbon due to the electronegativity of the nitrogen atoms. This makes it possible to facilitate the absorption and the discharge of the lithium ion due to the hard carbon, thereby adding the superior charge-discharge characteristics to the lithium ion secondary battery.

Further, by setting the amount of the nitrogen contained in the hard carbon to be equal to or less than 5 wt%, more particularly, equal to or less than 3 wt%, it is possible to prevent the electrical characteristics to be added to the hard carbon from excessively increasing, thereby preventing electrosorption between the lithium ion absorbed in the hard carbon and the nitrogen atoms in the hard carbon more than necessary. This makes it possible to suppress increasing of irreversible capacity of the lithium ion secondary battery and add superior charge-discharge characteristics to the lithium ion secondary battery.

The amount of the nitrogen contained in the hard carbon can be adjusted by appropriately setting the amount of the nitrogen contained in the mentioned above resin composition or the resin and/or changing conditions for carbonizing the resin composition or the resin. In a case where the resin composition or the resin is cured and/or pre-carbonized before the carbonization, it is also possible to adjust the amount of the nitrogen contained in the hard carbon by appropriately setting conditions for curing and/or pre-carbonizing.

For example, a method for obtaining the hard carbon containing the nitrogen of the above amount is a method including fixing the amount of the nitrogen contained in the resin composition or the resin used as the raw material for the hard carbon at a predetermined value and then adjusting conditions, in particularly, a method including adjusting final temperature for melt-mixing the resin composition or the resin.

A method for preparing the resin composition used as the raw material for the hard carbon is not particularly limited to a specific method. Examples of the method for preparing the resin composition include a method including preparing a mixture of the mentioned major resin component of the resin composition and the mentioned non-major resin component of the resin composition at a predetermined ratio and then melt-mixing the mixture, a method including mixing these components by dissolving them in solvent and a method including pulverizing and mixing these components.

The amount of the nitrogen contained in the hard carbon can be measured with, for example, a thermal conductivity method.

The thermal conductivity method includes changing a measurement sample to simple gas ($CO_2$, $H_2O$ and $N_2$) with a combustion method, homogenizing the obtained gas and then passing the homogenized gas through a column. As a result, the gas is separated in a phased manner and then it is possible to measure each of amounts of carbon, hydrogen and nitrogen contained in the measurement sample by measuring thermal conductivity of the gas in each of separated phases.

The explained thermal conductivity method may be performed with, for example, a measuring apparatus for analyzing elements "PE2400" made by PerkinElmer Incorporated.

In the hard carbon used for the present invention, a positron lifetime measured by a positron annihilation method is preferably in the range of 370 to 480 picoseconds, and more preferably in the range of 380 to 460 picoseconds.

If the positron lifetime of the hard carbon measured by the positron annihilation method is within the range of 370 to 480 picoseconds, it is possible to more improve the charge-discharge characteristics and the charge-discharge capacity of the lithium ion secondary battery even under a condition that pores allowing lithium ions to move into and out of the hard carbon are formed in the hard carbon, this condition is described below in detail.

For example, the positron annihilation method may be performed under the following conditions.

(A) positron source: a positron is generated from electron-positron pair with an electron accelerator.

(B) gamma-ray detector: a $BaF_2$-scintillator detector and a photomultiplier are used as the gamma-ray detector.

(C) measurement temperature and atmosphere: a measurement temperature is 25 °C and atmosphere is vacuum state.

(D) count number of annihilation gamma-rays: a count number of annihilation gamma-rays is equal to or larger than $3 \times 10^6$.

(E) energy of positron beam: energy of positron beam is 10 keV.

Description will be given to a relationship between the positron lifetime and a size of the pore in the hard carbon.

A positron annihilation method is a method for measuring a size of a pore in a measurement sample by measuring a lifetime between incidence of a positron ($e^+$) into the measurement sample and annihilation of the positron.

A positron is an antimatter with respect to an electron and has the same mass as the electron. On the other hand, the positron has positive electrical charge. It is known that the positron forms a pair with the electron (namely, forms a positron-electron pair (positronium)) at the time of incidence of the positron into a material and then the positron is annihilated.

When the positron is injected into the hard carbon, the positron ($e^+$) bonds with one of the electrons which are beaten out from the hard carbon and then the positron forms the positronium with the electron. The positronium is trapped in one of areas of the hard carbon in which electron density is relative low, that is local pores in the hard carbon, and then the trapped positronium is annihilated when the positronium is overlapped with electron cloud generated (penetrating) from porous walls of the pores.

In a case where the positronium exists in the pore in the hard carbon, a relationship between the size of the pore and a positronium lifetime becomes inverse relationship. Namely, if the size of the pore is small, the positron lifetime becomes short because an overlap between the positronium and surrounding electrons becomes large. In contrast, if the size of the pore is large, the positron lifetime becomes long because possibility of the overlap between the positronium and other electrons penetrating from the porous walls of the pores becomes low. Thus, it is possible to evaluate the size of the pore in the hard carbon by measuring the positronium lifetime.

As explained above, the positron injected into the hard carbon forms the positronium with the electron after the positron loses own energy and then the positronium (positron) is annihilated. In this time, a gamma-ray is emitted from the hard carbon. Thus, emission of the gamma-ray can be utilized as an end signal of the measurement.

In order to measure the positron lifetime, an electron accelerator is used as a positron source or a radioisotope $^{22}Na$ is generally used. The $^{22}Na$ emits a positron together with 1.28 MeV gamma-ray when the $^{22}Na$ changes to $^{22}Ne$

due to β+ decay. The positron injected into the hard carbon emits 511 keV gamma ray through annihilation processes.

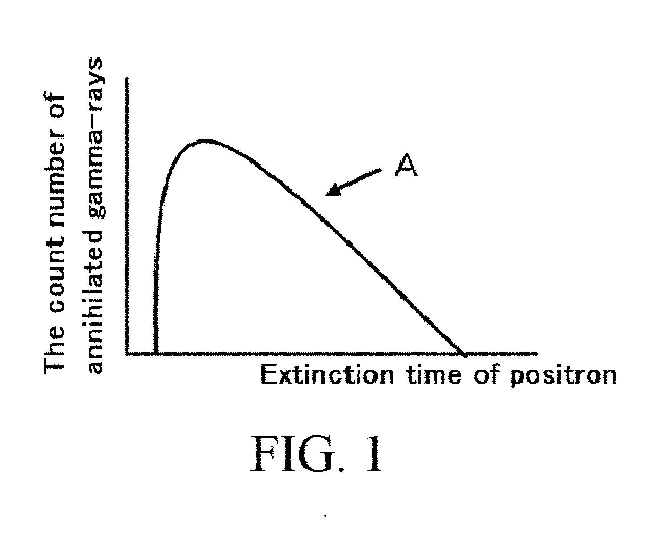

Accordingly, by respectively utilizing the gamma ray having 1.28 MeV energy and the gamma ray having 511 keV energy as a start signal and an end signal and then calculating time difference between receiving times of the start signal and the end signal, it is possible to obtain the positron lifetime. In more particular, a positron lifetime spectrum as shown in Fig. 1 can be obtained. A slope A of the positron lifetime spectrum indicates the positron lifetime, thereby obtaining the positron lifetime in the hard carbon from the positron lifetime spectrum.

In a case of using the electron accelerator as the positron source, the electron-positron pair is generated by using bremsstrahlung generated by irradiating a target formed of tantalum or tungsten with an electron beam and then the positron is generated from the electron-positron pair. In this case, a measurement starting point is defined with a point at a time when a positron beam is irradiated into the hard carbon (corresponding to the start signal with the above case utilizing the $^{22}$Na) and an end signal is defined in the same way as the above case utilizing the $^{22}$Na. This makes it possible to obtain the positron lifetime.

If the positron lifetime measured by the positron annihilation method is shorter than 370 picoseconds, there is a possibility that the hard carbon cannot sufficiently absorb and discharge the lithium ion because the size of the pore is too small. If the positron lifetime measured by the positron annihilation method is longer than 480 picoseconds, although a lithium ion storage capacity of the hard carbon increases, there is a possibility that the discharge of the lithium ion from the hard carbon is interrupted due to increasing of an electrical capacity of the hard carbon caused by penetration of other materials such as the electrolysis solution into the hard carbon.

The hard carbon has a half-value width of a peak measured by X-ray photoelectron spectroscopy (XPS) method and existing in the vicinity of 285 eV. The half-value width of the peak of the hard carbon is preferably in the range of 0.8 to 1.8 eV, and more preferably in the range of 0.9 to 1.6 eV.

If the half-value width of the peak measured by the XPS method and existing in the vicinity of 285 eV is equal to or narrower than 1.8 eV, almost elements existing on a surface of the hard carbon are derived by inactive C-C bonds and the like, and this results in a condition that there are substantially no functional groups and no impurities on the surface of the hard carbon. The functional groups and the impurities can react with an active material which relates to ionic conduction of the lithium ion and the like. On the other hand, if the half-value width of the peak existing in the vicinity of 285 eV is wider than 0.8 eV, it is possible to prevent excessive crystallization in the hard carbon.

Therefore, by using the hard carbon having the half-value width of the peak of 0.8 to 1.8 eV which is measured by the XPS method and exists in the vicinity of 285 eV, it is possible to suppress the deterioration of the charge-discharge efficiency due to the irreversible capacity of the lithium ion secondary battery.

Next, description will be given to a relationship between the XPS method and a surface condition.

The XPS method can identify constituent elements on a surface of a solid-state measurement sample by obtaining binding energy of electrons in the atoms (this value is inherent in the type of atom) on the surface of the solid-state measurement sample. The binding energy can be obtained by irradiating the surface of the solid-state measurement sample with X-rays and then measuring kinetic energies of photoelectrons emitted from atoms excited by the X-rays.

A FT-IR method can also identify the surface condition of the solid-state measurement sample. The FT-IR method can identify chemical bindings existing in a depth of about 1 μm from the surface of the solid-state measurement sample. In contrast, the XPS method can identify the elements existing in a depth of several Å from the surface of the solid-state measurement sample. Thus, it is preferable that the XPS method is used for the identification of the functional groups existing in a closer area from the surface of the solid-state measurement sample.

The hard carbon preferably has an average surface separation $d_{022}$ of (002) face, which is obtained by using a Wide-angle X-ray diffraction method and the Bragg equation, being in the range of 3.4 to 3.9 Å. If the average surface separation $d_{022}$ is equal to or larger than 3.4 Å, more particularly equal to or larger than 3.6 Å, it is possible to suppress expansion and contraction between layers in the layered structure of the hard carbon due to the absorption of the lithium ion secondary battery. This makes it possible to suppress the deterioration of the charge-discharge cycle efficiency of the lithium ion secondary battery.

On the other hand, if the average surface separation $d_{022}$ is equal to or smaller than 3.9 Å, more particularly equal to or smaller than 3.8 Å, it is possible to suppress the deterioration of the charge-discharge efficiency of the lithium ion secondary battery because the absorption and desorption of the lithium ion in the hard carbon are smoothly performed.

Further, the hard carbon preferably has a crystallite size Lc in a c-axis direction (a direction perpendicular to the (002) face) being in the range of 8 to 50 Å.

By setting the crystallite size Lc to be equal to or larger than 8 Å, more particularly equal to or larger than 9 Å, it is possible to form interlayer spaces for absorbing and desorbing the lithium ion in the layered structure of the hard carbon. This makes it possible to add sufficient charge-discharge efficiency to the lithium ion secondary battery. On the other hand, by setting the crystallite size Lc to be equal to or smaller than 50 Å, more particularly equal to or smaller than 15 Å, it is possible to suppress collapse of the layered structure of the hard carbon and reductive degradation of the electrolysis solution due to the absorption and the desorption of the lithium ion. This makes it possible to suppress the deteriorations of the charge-discharge efficiency and the charge-discharge cycle efficiency of the lithium ion secondary battery.

The crystallite size Lc can be obtained, for example, as explained below.

In more particular, the crystallite size Lc can be determined by the following Scherrer equation with a diffraction angle and a half-value width of a peak of the (002) face in spectrum obtained from an X-Ray diffraction measurement.

$$Lc = 0.94 \lambda / (\beta cos\theta) \quad (Scherrer \ equation)$$

Lc: Lc is a crystallite size.

$\lambda$ : $\lambda$ is a wavelength of a characteristic X-ray K$\alpha$1 emitted from a negative electrode.

$\beta$ : $\beta$ is a half-value width of a peak (radian).

$\theta$ : $\theta$ is a reflection angle of spectrum.

X-ray diffraction spectrum of the hard carbon can be measured by, for example, a X-ray diffraction apparatus "XRD-7000" made by Shimadzu Corporation. The average surface separation of the hard carbon can be measured, for example, as explained below.

In more particular, the average surface separation d can be obtained by the following Bragg equation with spectrum obtained from the X-ray diffraction measurement to the hard carbon.

$$\lambda = 2d_{hkl}sin\theta \ (Bragg \ equation) \ (d_{hkl} = d_{002})$$

$\lambda$ : $\lambda$ is the wavelength of the characteristic X-ray K$\alpha$1 emitted from the negative electrode.

$\theta$ : $\theta$ is the reflection angle of the spectrum.

In addition, the hard carbon preferably has a specific surface area, which is measured by a BET three-point method utilizing nitrogen adsorption, being in the range of 1 to 15 m$^2$/g.

By setting the specific surface area measured by the BET three-point method utilizing the nitrogen adsorption to be equal to or smaller than 15 m$^2$/g, it is possible to suppress reactions between the hard carbon (carbon material) and the electrolysis solution.

Further, by setting the specific surface area measured by the BET three-point method utilizing the nitrogen adsorption to be equal to or larger than 1 m$^2$/g, it is possible to ensure appropriate permeability of the electrolysis solution into the hard carbon.

A method for obtaining the specific surface area is performed, for example, as explained below.

In more particular, an adsorbed amount of monomer Wm is obtained by the following equation (1), a total surface area $S_{total}$ is obtained by the following equation (2) and then the specific surface area S is obtained by the following equation (3).

$$1 / [W (Po / P-1)] = (C - 1) / WmC (P / Po) / WmC \cdots (1)$$

wherein P: P is gas pressure of an adsorbate under a adsorption equilibrium condition, Po: Po is saturated vapor pressure of the adsorbate at adsorption temperature, W: W is an adsorbed amount under the adsorption equilibrium pressure P, Wm: Wm is an adsorbed amount of the monomer, and C: C is a constant value related to an interaction quantity between a surface of a solid-state material and the adsorbate (C = exp{(E1 - E2) RT}) [wherein E1: E1 is heat of adsorption (kJ/mol) of a first layer, and E2: E2 is liquefaction heat (kJ/mol) at a measurement temperature of the adsorbate].

$$S_{total} = (WmNAcs) \ M \cdots (2)$$

wherein N: N is the Avogadro number, M: M is a molecular weight and Acs: Acs is an adsorption cross-section area.

$$S = S_{total} / w \cdots (3)$$

wherein w: w is a weight (g) of a measurement sample.

In a typical example of the above hard carbon, the raw material for the hard carbon is the resin or the resin composition. The typical example of the hard carbon can be obtained, for example, as explained below.

At first, a resin or a resin composition to be carbonized is prepared.

An apparatus for preparing the resin composition is not particularly limited to a specific type. For example, in a case where the resin composition is prepared by melt-mixing, a kneading device such as a kneading roll, a single screw kneader and a double-screw kneader may be used as the apparatus for preparing the resin composition. Further, in a case where the resin composition is prepared by dissolving and mixing, a mixing device such as a Henschel mixer and a disperser may be used as the apparatus for preparing the resin composition. Furthermore, in a case where the resin composition is prepared by pulverizing and mixing, a pulverizing device such as a hammer-mill and a jet-mill may be used as the apparatus for preparing the resin composition.

The resin composition obtained in the above manner may be a mixture obtained by physically mixing a plurality of compositions to be contained in the resin composition or chemically reacting a part of the mixture with mechanical energy added at the time of preparing or mixing (stirring, kneading and the like) the resin composition and thermal energy converted from the mechanical energy. In particular, the resin composition may be obtained from the plurality of the compositions through a mechanochemical reaction or a chemical reaction due to the thermal energy.

As mentioned above, the hard carbon is obtained by carbonizing the resin composition or the resin.

Conditions for carbonizing the resin composition or the resin are not particularly limited to specific conditions. For example, the conditions may be as follows. A treatment temperature is raised from room temperature at a rising rate of 1 to 200 °C/hour and then the treatment temperature is kept in the range of 800 to 3000 °C for 0.1 to 50 hours, preferably for 0.5 to 10 hours. In addition, the carbonization of the resin composition is preferably performed under an inactive atmosphere such as nitrogen and helium gas; a substantially inactive atmosphere such as inactive gas containing a small amount of oxygen; or a reductive gas atmosphere. By setting the conditions as described above, it is possible to suppress a thermal decomposition (oxidative decomposition) of the resin, thereby obtaining the desired hard carbon.

The conditions such as temperature and time for the carbonization may be appropriately adjusted in order to optimize the characteristics of the hard carbon.

For obtaining the hard carbon having the half-value width of the peak of 0.8 to 1.8 eV, which is measured by the XPS method and exists in the vicinity of 285 eV, the conditions for the carbonization may be appropriately adjusted depending on the type of the resin and the like. For example, the treatment temperature for the carbonization is preferably set to be equal to or higher than 1000 °C or the rising rate of the treatment temperature is preferably set to be lower than 200 °C/hour.

By setting the conditions as explained above, it is possible to allow the surface of the hard carbon to contain inactive functional groups and the like. This makes it possible to more reliably obtain the hard carbon having the half-value width of the peak of 0.8 to 1.8 eV, which is measured by the XPS method and exists in the vicinity of 285 eV.

The resin composition or the resin may be pre-carbonized before the above carbonization.

Conditions for the pre-carbonization are not particularly limited to specific conditions, but the conditions may be set as follows. A treatment temperature is set to be in the range of 200 to 600 °C for 1 to 10 hours. The pre-carbonizing before the carbonization allows the resin composition or the resin to be infusible. Thus, even if the resin composition or the resin is pulverized before the carbonization, it is possible to prevent the pulverized resin composition or the pulverized resin from melting and adhering with each other at the time of the carbonization. This makes it possible to efficiently obtain the desired hard carbon.

In this time, for obtaining the hard carbon having the positron lifetime of 370 to 480 picoseconds which is measured by the positron annihilation method, the pre-carbonization may be performed under a condition where, for example, there is no reductive gas and no inactive gas.

In a case of using a thermosetting resin or a polymerizable polymer composition as the resin for preparing the hard carbon, the resin composition or the resin may be cured before the above pre-carbonization.

A method for curing the resin composition or the resin is not particularly limited to a specific method. Examples of the method for curing the resin composition or the resin include a thermal curing method by adding thermal energy enough for a curing reaction of the resin composition to the resin composition and a method by using a curing agent together with the resin. This makes it possible to pre-carbonize the resin composition or the resin in substantially-solid phase. Thus, it is possible to carbonize or pre-carbonize the resin composition or the resin in a state that a structure of the resin is partially kept, thereby controlling the structure and the characteristics of the hard carbon with relative ease.

In a case where the resin composition or the resin is carbonized or pre-carbonized as explained above, it is possible to add desired characteristics to the hard carbon by adding other materials such as a metallic material, a pigment, an antifriction, an antistatic agent and an antioxidizing agent into the resin composition.

In a case where the resin composition or the resin is cured and/or pre-carbonized, the resin composition or the resin may be then pulverized before the carbonization. This makes it possible to reduce variation in thermal history at the time of the carbonization, thereby improving uniformity of the surface condition of the hard carbon. In addition, treatability of resulting product is improved.

Further, for obtaining the hard carbon having the positron lifetime of 370 to 480 picoseconds which is measured by the positron annihilation method, for example, the resulting product (the carbonized resin composition or the carbonized resin) is naturally cooled to a temperature in the range of 500 to 800 °C under reductive gas or inactive gas after the carbonization and then cooled to a temperature equal to or lower than 100 °C at a cooling rate of 100 °C/hour as required.

By cooling the carbonized resin composition or the carbonized resin as explained above, it is possible to more reliably keep the pores formed in the hard carbon because cracks in the hard carbon due to rapid cooling are suppressed. Thus, it is possible to obtain the hard carbon having the positron lifetime in the range of 370 to 480 picoseconds which is measured by the positron annihilation method.

The carbon material described above is preferably formed of a plurality of particles. This makes it possible to increase a surface area of the negative electrode of the lithium ion secondary battery and more reliably increase a storage amount of the lithium ion of the negative electrode.

When a volume based cumulative distribution curve of the particles forming the carbon material is obtained by accumulating the particles from the particle having the smallest particle size, and then a particle size of the particle being at a 5% accumulation point on the cumulative distribution curve is defined as "D5", a particle size of the particle being at a 50% accumulation point on the cumulative distribution curve is defined as "D50" and a particle size of the particle being at a 95% accumulation point on the cumulative distribution curve is defined as "D95", it is preferred that "D50" is in the range of 1.0 to 50 $\mu$m and "D50" and "D95" satisfy a relationship of $2.0 \leq D95/D5 \leq 30$.

By forming the hard carbon so as to satisfy the above conditions, it is possible to more improve the charge-discharge capacity and the charge-discharge efficiency of the lithium ion secondary battery. Further, it is possible to add superior press property to the carbon material and make handing of the carbon material at the time of producing the negative electrode material for the lithium ion secondary battery and the lithium ion secondary battery easier. As a result, productivity of the negative electrode material for the lithium ion secondary battery and the lithium ion secondary battery increases.

Further, since the superior press property is added to the carbon material, it is possible to set a compaction ratio of the carbon material at the time of producing the negative electrode material for the lithium ion secondary battery and the lithium ion secondary battery to be an optimum value. Namely, it is possible to produce a high-density negative electrode (electrode). This makes it possible to easily and reliably form optimum conductive paths in the negative electrode.

In contrast, if the hard carbon does not satisfy the above conditions, there is a case where the above superior effects cannot be provided. In more particular, if "D50" (that is an average particle size of the particles forming the hard carbon) is smaller than the above lower limit, it is difficult to make the compaction ratio of the carbon material cannot smaller. As a result, a size of a compact of the carbon material (a height of a carbon material layer) becomes larger, and thus handleability of the compact of the carbon material deteriorates. In addition, there is a possibility that the charge-discharge efficiency of the lithium ion secondary battery using the carbon material is not sufficiently improved because the specific surface area increases more than necessary.

On the other hand, if "D50" (that is the average particle size of the particles forming the hard carbon) is larger than the above upper limit, there is a case where it is difficult to sufficiently improve smoothness of a coating film obtained by coating a base material with the slurry depending on viscosity of slurry prepared by using the carbon material and the like. Further, there is a possibility that the charge-discharge capacity of the lithium ion secondary battery using the carbon material is not sufficiently improved because the particles are cracked depending on pressure added to the hard carbon at the time of producing the negative electrode. Furthermore, there is a possibility that it is difficult to form the optimum conductive paths in the electrode because the compaction ratio at the time of pressing the carbon material becomes small and movements of the particles due to the pressing become small.

If D95/D5 is smaller than the above lower limit, there is also a possibility that it is difficult to form the optimum conductive paths in the electrode because the compaction ratio at the time of pressing the carbon material becomes small and the movements of the particles due to the pressing become small. Further, a current density cannot be sufficiently improved because packing property at the time of producing the negative electrode material for the lithium ion secondary battery deteriorates. As a result, there is a case where the charge-discharge capacity of the lithium ion secondary battery cannot be sufficiently improved. Further, there is a case where the charge-discharge efficiency of the lithium ion secondary battery cannot be sufficiently improved.

On the other hand, if D95/D5 is larger than the above upper limit, there is a possibility that the handleability (for example, handleability at the time of laminating the compact on a current collector) of the compact of the carbon material deteriorates because the compaction ratio at the time of pressing the carbon material cannot be small and the height of the carbon material layer becomes larger. Further, there is a case where the current collector becomes likely to break at the time of producing the negative electrode and a resistance value of the electrode becomes high. Furthermore, there is a possibility that the specific surface area of the carbon material becomes too large. As a result, the charge-discharge efficiency of the lithium ion secondary battery cannot be sufficiently improved.

As mentioned above, "D50" (the average particle size) of the particles is preferably in the range of 1.0 to 50 $\mu$m, more preferably in the range of 2.0 to 30 $\mu$m, and even more preferably in the range of 2.0 to 15 $\mu$m. By setting

"D50" to be within the above range, it is possible to enhance the above advantageous effects.

As mentioned above, D95/D5 of the particles is preferably in the range of 2.0 to 30, more preferably in the range of 3.0 to 28, and even more preferably in the range of 4.0 to 20. By setting D95/D5 to be within the above range, it is possible to enhance the above advantageous effects.

"D5" of the particles is preferably in the range of 0.1 to 10 $\mu$m, and more preferably in the range of 0.5 to 5 $\mu$m. "D95" of the particles is preferably in the range of 1 to 100 $\mu$m, and more preferably in the range of 3 to 50 $\mu$m.

When the carbon material is pressed in a state that a load per unit area is 2 t/cm$^2$, a density ratio (compaction ratio) between densities of the carbon material layer before and after the pressing of the carbon material (that is $d_1/d_0$ when the density of the carbon material layer before the pressing is defined as "$d_0$" [g/cm$^3$] and the density of the carbon material layer after the pressing is defined as "$d_1$" [g/cm$^3$]) is preferably in the range of 1.2 to 1.5, and more preferably in the range of 1.3 to 1.4. If the compaction ratio $d_1/d_0$ is within the above range, it is possible to consider that the press property of the carbon material is optimized. Thus, it is possible to enhance the above advantageous effects.

Since the carbon material for the lithium ion secondary battery according to the present invention contains the graphite as the major component thereof and the hard carbon, it is possible to easily and reliably satisfy the above mentioned conditions (conditions related to the values of "D50" and D95/D5 of the particles). Therefore, the lithium ion secondary battery produced by using the carbon material for the lithium ion secondary battery according to the present invention can provide high charge-discharge capacity and superior charge-discharge efficiency in good balance.

In a case where the carbon material is formed of the plurality of the particles, the graphite and the hard carbon may be respectively formed of particles differing from each other. Alternatively, a compound of the graphite and the hard carbon may form particles (composite particles). The composite particles can be obtained by, for example, collision between the graphite particles and the hard carbon particles with mechanical means.

In a case where the graphite and the hard carbon are respectively formed of the particles differing from each other, when volume-based cumulative distribution curves of the particles respectively forming the graphite and the hard carbon are obtained by accumulating the particles from the particle having the smallest volume, a particle size of the particle forming the graphite and being at a 50% accumulation point on the cumulative distribution curve (an average particle size of the particles forming the graphite) is preferably in the range of 5 to 50 $\mu$m, and more preferably in the range of 5 to 30 $\mu$m. By setting the average particle size of the particles forming the graphite to be within the above range, it is possible to produce a higher-density negative electrode (electrode). Further, the lithium ion secondary battery produced by using the negative electrode can keep the charge-discharge efficiency at high level.

In this case, if the amount of the graphite (graphite particles) contained in the carbon material is within the above range, it is possible to easily and reliably satisfy the above mentioned conditions (conditions related to the values of "D50" and D95/D5 of whole of the particles). As a result, it is possible to efficiently improve the charge-discharge efficiency, the stability during the repeated charge-discharge cycles and the charge-discharge characteristics at high current of the lithium ion secondary battery.

In the case where the graphite and the hard carbon are respectively formed of the particles differing from each other, when the volume-based cumulative distribution curves of the particles respectively forming the graphite and the hard carbon are obtained by accumulating the particles from the particle having the smallest volume, a particle size of the particle forming the hard carbon and being at a 50% accumulation point on the cumulative distribution curve is preferably in the range of 1 to 50 $\mu$m, and more preferably in the range of 2 to 30 $\mu$m. By setting the average particle size of the particles forming the hard carbon to be within the above range, it is possible to produce a higher-density negative electrode.

In this case, if the amount of the hard carbon (hard carbon particles) contained in the carbon material is within the above range, it is possible to easily and reliably satisfy the above mentioned conditions (conditions related to the values of "D50" and D95/D5 of whole of the particles). As a result, it is possible to efficiently improve the stability during the repeated charge-discharge cycles and the charge-discharge characteristics at high current of the lithium ion secondary battery without the deterioration of the charge-discharge efficiency of the lithium ion secondary battery.

Further, by selecting a material to be contained in the resin composition or the resin used as the raw material for the hard carbon (hard carbon particles) from the group consisting of a novolac-type phenol resin, a resol-type phenol resin, a melamine resin, a furan resin, an aniline resin and a modified composition obtained by modifying one or more of the above resins, it is possible to easily and reliably satisfy the above mentioned conditions (conditions related to the values of "D50" and D95/D5 of whole of the particles).

The carbon material is preferably constituted of a porous body having pores including mesopores and macropores. This makes it possible to increase the surface area of the negative electrode of the lithium ion secondary battery, thereby more reliably improving the storage capacity of the lithium ion of the negative electrode.

A volume ratio of a sum of a total volume of the mesopores of the porous body and a total volume of the macropores of the porous body relative to a total volume of the pores of the porous body is preferably in the range of 80 to 98%. Further, a volume of the macropores per unit weight of the porous body is preferably in the range of 0.005 to 0.030 ml/g.

By using the carbon material having the above structure, it is possible to improve the charge-discharge capacity and the current density at the time of the charging and discharging of the lithium ion secondary battery, thereby providing quick charging and discharging of the lithium ion secondary battery. Further, it is possible to improve the productivity of the negative electrode because the superior press property can be added to the carbon material for the lithium ion secondary battery. Furthermore, it is possible to optimize the compaction ratio of the carbon material at the time of producing the negative electrode for the lithium ion secondary battery and the lithium ion secondary battery, namely, it is possible to produce a high-density negative electrode (electrode) and easily and reliably form the optimum conductive paths in the negative electrode because the superior press property can be added to the carbon material.

In contrast, if the volume ratio of the sum of the total volume of the mesoprous of the porous body and the total volume of the macropores the porous body relative to the total volume of the pores of the porous body is not within the above range or the volume of the macropores per unit weight of the porous body is not within the above range, there is a case where the above advantageous results cannot be provided. In particular, if the volume ratio of the sum of the total volume of the mesoprous of the porous body and the total volume of the macropores of the porous body relative to the total volume of the pores of the porous body is smaller than the above lower limit, the current density in the negative electrode produced by using the carbon material cannot be sufficiently improved because microscopic pores are formed in the negative electrode more than necessary. As a result, there is a possibility that the charge-discharge efficiency of the lithium ion secondary battery cannot be sufficiently improved.

On the other hand, if the volume ratio of the sum of the total volume of the mesoprous of the porous body and the total volume of the macropores of the porous body relative to the total volume of the pores of the porous body is larger than the above upper limit, the pores collapse depending on the pressure at the time of producing the negative electrode using the carbon material. As a result, there is a possibility that the current density at the time of the charging and discharging of the lithium ion secondary battery cannot be sufficiently improved because spaces through which the lithium ion is absorbed into and desorbed from the negative electrode decrease.

If the volume of the macropores per unit weight of the porous body is smaller than the above lower limit, an amount of paths in which the electrolysis solution can penetrate becomes small. As a result, there is a possibility that the current density at the time of the charging and discharging of the lithium ion secondary battery cannot be sufficiently improved because a diffusion speed of the electrolysis solution becomes slow depending on viscosity of the electrolysis solution.

On the other hand, if the volume of the macropores per unit weight of the porous body is larger than the above upper limit, there is a case where handleability of the carbon material deteriorates because the density of the carbon material (the porous body) decreases and the size of the carbon material (the porous body) increases. Further, there is a case where the charge-discharge efficiency of the lithium ion secondary battery cannot be sufficiently improved because side reactions which are not related to the charging and the discharging between the carbon material (the graphite and/or the hard carbon) and the electrolysis solution increase.

In this specification, the term "mesopores" refers to pores having a diameter equal to or more than 2 nm and smaller than 50 nm, the term "macropores" refers to pores having a diameter equal to or larger than 50 nm and a term "micropores" refers to pores having a diameter smaller than 2 nm.

As mentioned above, the volume ratio of the sum of the total volume of the mesoprous of the porous body and the total volume of the macropores of the porous body relative to the total volume of the pores of the porous body is preferably in the range of 80 to 98%, but more preferably in the range of 85 to 95%, and even more preferably in the range of 85 to 92%. By using the carbon material having the volume ratio being within the above range, it is possible to enhance the above advantageous effects.

As mentioned above, the volume of the macropores per unit weight of the porous body is preferably in the range of 0.005 to 0.030 ml/g, but more preferably in the range of 0.007 to 0.025 ml/g. By using the carbon material having the volume of the macropores being within the above range, it is possible to enhance the above advantageous effects.

A volume of the mesopores per unit weight of the porous body is preferably in the range of 0.001 to 0.025 ml/g, and more preferably in the range of 0.003 to 0.020 ml/g.

A volume ratio of the volume of the mesopores of the porous body relative to the total volume of the pores of the porous body is preferably in the range of 20 to 50%, and more preferably in the range of 30 to 45%.

A volume ratio of the volume of the macropores of the porous body relative to the total volume of the pores of the porous body is preferably in the range of 30 to 70%, and more preferably in the range of 40 to 60%.

Since the carbon material for the lithium ion secondary battery according to the present invention contains the graphite as the major component thereof and the hard carbon, it is possible to easily and reliably satisfy the above conditions (conditions related to the volume ratio of the sum of the total volume of the mesoprous of the porous body and the total volume of the macropores of the porous body relative to the total volume and the volume of the macropores per unit weight of the porous body). Thus, the lithium ion secondary battery produced by using the carbon material for the lithium ion secondary battery according to the present invention can provide high charge-discharge capacity and superior charge-discharge efficiency in good balance.

In a case where the carbon material is formed of the porous bodies of the graphite and the hard carbon, the porous body of the graphite may have one of the mesopores and the macropores and the porous body of the hard carbon may have the other one of the mesopores and the macropores. Alternatively, each of the porous bodies of the graphite and the hard carbon may have both of the mesopores and the macropores.

In a case where each of the porous bodies of the graphite and the hard carbon has both of the mesopores and the macropores, if the amount of the graphite (graphite particles) contained in the carbon material is within the above range, it is possible to easily and reliably satisfy the above mentioned conditions (conditions related to the volume ratio of the sum of the total volume of the mesopores of the porous body and the total volume of the macropores of the porous body relative to the total volume and the volume of the macropores per unit weight of the porous body). As a result, it is possible to efficiently improve the charge-discharge efficiency, the stability during the repeated charge-discharge cycles and the charge-discharge characteristics at high current of the lithium ion secondary battery.

Further, in a case where each of the porous bodies of the graphite and the hard carbon has both the mesopores and the macropores, if the amount of the hard carbon (hard carbon particles) contained in the carbon material is within the above range, it is possible to easily and reliably satisfy the above mentioned conditions (conditions related to the volume ratio of the sum of the total volume of the mesoprous of the porous body and the total volume of the macropores of the porous body relative to the total volume and the volume of the macropores per unit weight of the porous body). As a result, it is possible to efficiently improve the stability during the repeated charge-discharge cycles and the charge-discharge characteristics at high current of the lithium ion secondary battery without the deterioration of the charge-discharge efficiency of the lithium ion secondary battery.

Considering the above factors, the carbon material for the lithium ion secondary battery according to the present invention is preferably formed of a plurality of porous particles satisfying the above conditions especially.

«Negative electrode material for secondary battery and lithium ion secondary battery»

Next, description will be given to the negative electrode material for the secondary battery (hereinafter, it is sometimes referred to as "negative electrode material" simply) and the lithium ion secondary battery (hereinafter, it is sometimes referred to as "secondary battery" simply) according to the present invention.

The negative electrode material for the lithium ion secondary battery according to the present invention contains the carbon material for the lithium ion secondary battery according to the present invention explained above. The lithium ion secondary battery according to the present invention includes the negative electrode material for the lithium ion secondary battery according to the present invention. This makes it possible to provide the lithium ion secondary battery which can provide the high charge-discharge capacity and the superior charge-discharge efficiency in good balance. Further, by forming the carbon material with the plurality of the particles and appropriately setting a particle size distribution of the particles, it is possible to improve electrical characteristics at high current of the lithium ion secondary battery. Furthermore, by forming the carbon material with the porous body having the mesopores and the macropores and appropriately setting parameters such as the ratio between the mesopores and the macropores of the porous body, it is possible to increase the current density at the time of the charging and discharging of the lithium ion secondary battery.

Hereinafter, description will be given to the preferable embodiments of the negative electrode material for the lithium ion secondary battery and the lithium ion secondary battery according to the present invention.

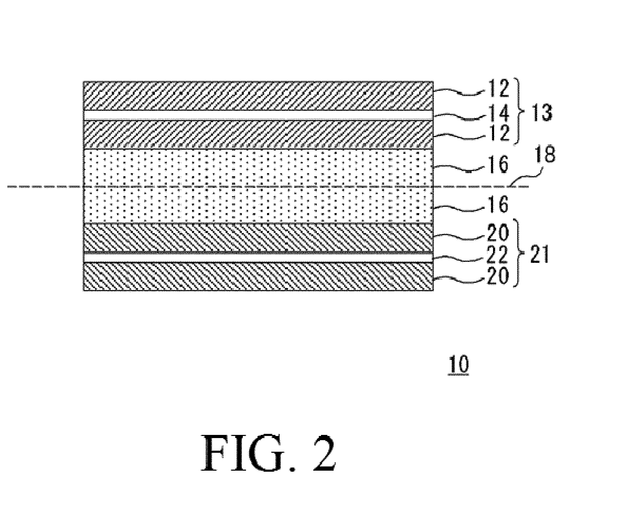

Fig. 2 is a schematic view showing a structure of a secondary battery 10 according to the preferable embodiment of the present invention.

As shown in Fig. 2, the secondary battery 10 includes a negative electrode 13, a positive electrode 21, electrolysis solution 16 and a separator 18.

As shown in Fig. 2, the negative electrode 13 has a negative electrode material 12 and a negative electrode current collector 14.

The current collector 14 is formed of, for example, a copper foil or a nickel foil.

The negative electrode material 12 consists of the carbon material for the lithium ion secondary battery of the present invention as explained above.

For example, the negative electrode 13 can be produced as follows.

First, a paste-like mixture is prepared by mixing 1 to 30 parts by weight of an organic polymer binding agent (for example, a fluoropolymer containing polyethylene, polypropylene or the like and an elastomeric polymer such as butyl rubber and butadiene rubber) and 100 parts by weight of the carbon material for the lithium ion secondary battery with an appropriate amount of viscosity modifying solvent (for example, N-methyl-2-pyrolidone and dimethylformamide). Next, the negative electrode material 12 is prepared by molding the mixture into a sheet-like shape, a pellet shape or the like with a compression molding, a roll molding or the like. After that, the negative electrode 13 can be produced by laminating the resulting negative electrode material 12 on the negative electrode current collector 14.

Alternatively, a slurry mixture is first prepared by mixing 1 to 30 parts by weight of the organic polymer binding agent (for example, a fluoropolymer containing polyethylene, polypropylene or the like and an elastomeric polymer such as butyl rubber and butadiene rubber) and 100 parts by weight of the carbon material for the lithium ion secondary battery with an appropriate amount of the viscosity modifying solvent (for example, N-methyl-2-pyrolidone and dimethylformamide). Next, the negative electrode 13 can be produced by coating the negative electrode current collector 14 with the slurry mixture and then drying the slurry on the negative electrode current collector 14. If necessary, the slurry on the negative electrode current collector 14 is further compression-molded.

A space between the positive electrode 21 and the negative electrode 13 is filled with the electrolysis solution 16. The electrolysis solution 16 serves as a layer through which the lithium ion can be transferred due to the charging and discharging of the lithium ion secondary battery.

As the electrolysis solution 16, non-aqueous solvent dissolving a lithium salt which can serve as an electrolyte may be used.

Examples of the non-aqueous solvent include a cyclic ester such as propylene carbonate, ethylene carbonate and $\gamma$-butyrolactone; a linear ester such as dimethyl carbonate and diethyl carbonate; a linear ether such as dimethoxyethane; and a mixture of one or more of the above materials.

Examples of the electrolyte include a lithium metal salt such as $LiClO_4$ and $LiPF_6$ and tetraalkylammonium salt. Further, the above salt may be mixed with polyethyleneoxide, polyacrylonitril or the like and the resulting salt may be used as a solid electrolyte.

The separator 18 is not particularly limited to a specific type. Examples of the separator 18 include a porous film such as polyethylene and polypropylene and a non-woven fabric.

As shown in Fig. 2, the positive electrode 21 has a positive electrode material 20 and a positive electrode current collector 22.

The positive electrode material 20 is not particularly limited to a specific material. Examples of the positive electrode material 20 include a simplex lithium metal and a complex oxide such as lithium cobalt oxide ($LiCoO_2$), lithium nickel oxide ($LiNiO_2$) and lithium manganese oxide ($LiMn_2O_4$). Further, a conductive polymer such as polyaniline and polypyrrole may be added to the positive electrode material 20.

Examples of the positive electrode current collector 22 include aluminum foil.

The positive electrode 21 in this embodiment can be obtained with an existing method for obtaining an existing positive electrode.

Although the present invention has been described with reference to the preferable embodiments, the present invention is not limited thereto.

EMBODIMENTS

Hereinafter, although the present invention will be described in detail with reference to examples, comparative examples and a reference example, the present invention is not limited thereto. In the following description, the term "parts" refers to "parts by weight" and the term "%" refers to "wt%".

[1] Measurement method

First, description will be given to a measurement method used in the following examples, the comparative examples and the reference example.

1. Measurement method for positron lifetime by positron annihilation method

By using a measurement apparatus for measuring a positron lifetime, a positronium lifetime and nanopores (made by Advanced industrial science and technology), the positron lifetime was measured by detecting an electromagnetic wave (annihilation gamma-ray) generated at the time of annihilation of the positron under the following conditions.

The concrete conditions are as follows.

(A) Positron source: by using an electron accelerator provided in Research institute of instrumentation frontier of Advanced industrial science and technology, an electron-positron pair was generated and then a positron was generated (the electron accelerator irradiated a target (tantalum) with an electron beam and generated the electron-positron pair and then generated the positron).

(B) Gamma-ray detector: a $BaF_2$-scintillator detector and a photomultiplier were used as the gamma-ray detector.

(C) measurement temperature and atmosphere: a measurement temperature is 25 °C and atmosphere was vacuum state ($1 \times 10^{-5}$ Pa ($1 \times 10^{-7}$ Torr)).

(D) count number of annihilation gamma-rays: a count number of the annihilation gamma-rays was equal to or larger than $3 \times 10^6$.

(E) energy of positron beam: energy of positron beam was 10 keV.

(F) size of measurement sample: a measurement sample was prepared by coating a measurement sample holder (aluminum board) with particles so that a thickness of a particle layer was 0.1 mm.

2. Analysis of surface condition with XPS method

By using Escalab-220iXL (made by Thermo Fisher Scientific Corporation), the XPS method was performed under the following conditions. A peak intensity and a half-value width of a peak existing in the vicinity of 285 eV were obtained from the resulting spectrum according to the following method.

(Measurement conditions)

X-ray source: Mg-K$\alpha$
Output: 12kV-10mA
(Method for obtaining)

The peak intensity and the half-value width of the peak were obtained from the resulting spectrum as follows.

In particular, a base line was first drawn from both ends of the target peak and then a distance from the base line to a top of the peak was measured. The obtained distance was defined as the peak intensity. This is because a base line of spectrum normally obtained can be varied depending on a measurement environment, a difference of the type of the measurement sample and the like. In a case where a plurality of the peaks overlap with each other in the resulting spectrum, a base line was drawn from both ends of an overlapping peak formed of the plurality of peaks. The half-value width of the peak was obtained by drawing a line parallel to the base line so as to pass through 1/2 intensity of the peak intensity obtained from the top of the peak and then measuring energy between points at intersections of the peak and the line.

3. Average surface separation ($d_{022}$) and crystallite size (Lc) in c-axis direction

By using a X-ray diffraction apparatus "XRD-7000" made by Shimadzu Corporation, an average surface separation of the hard carbon was measured.

In particular, the average surface separation $d_{022}$ was obtained from the spectrum obtained from a X-ray diffraction measurement to the hard carbon according to the following the Bragg equation.

$\lambda = 2d_{hkl}\sin\theta$ (Bragg equation) ($d_{hkl} = d_{002}$)
$\lambda$ : $\lambda$ is a wavelength of a characteristic X-ray K$\alpha$1 emitted from a negative electrode.
$\theta$ : $\theta$ is a reflection angle of spectrum.

A crystallite size Lc of the hard carbon was measured as follows.

In particular, the crystallite size Lc was obtained from a diffraction angle and the half-value width of the peak of (022) face in the spectrum obtained from the X-ray diffraction measurement to the hard carbon according to the following a Scherrer equation.

```
[0157]      Lc = 0.94 λ / (βcosθ)   (Scherrer equation)
```

Lc: Lc is the crystallite size.
$\lambda$ : $\lambda$ is the wavelength of the characteristic X-ray K$\alpha$1 emitted from the negative electrode.
$\beta$ : $\beta$ is the half-value width of the peak (radian).
$\theta$ : $\theta$ is the reflection angle of spectrum.

4. Specific surface area

By using Nova-1200 made by Yuasa Corporation, a specific surface area of the hard carbon was measured by a BET three-point method utilizing nitrogen adsorption. A concrete measurement method is the same as that explained in the above embodiment.

5. Contained amount of carbon and contained amount of nitrogen

By using a measuring apparatus "PE2400" for analyzing elements made by PerkinElmer Incorporated, an amount of the carbon and an amount of the nitrogen contained in the hard carbon were measured. In particular, the measurement sample was first changed to $CO_2$, $H_2O$ and $N_2$ with a combustion method, and then the gasified measurement sample was homogenized and passed through a column. As a result, the gasified measurement sample was separated in a phased manner and then each of the amounts of carbon, hydrogen and nitrogen contained in the measurement sample were obtained by measuring thermal conductivity of the gasified measurement sample in each of separated phases.

5-1) Contained amount of carbon

Each of the hard carbons obtained in the following examples, the comparative examples and the reference example was dried at a temperature of 110 °C under vacuum state for 3 hours. After that, each of the amounts of the carbon contained in the dried hard carbons was measured by using the measurement apparatus for analyzing elements.

5-2) Contained amount of nitrogen

Each of the hard carbons obtained in the following examples, the comparative examples and the reference example was dried at a temperature of 110 °C under vacuum state for 3 hours. After that, each of the amounts of the nitrogen contained in the dried hard carbons was measured by using the measurement apparatus for analyzing elements.

6. Charge capacity, discharge capacity, charge-discharge efficiency and the like

(1) Producing bipolar coin cell for evaluating secondary battery

A slurry negative electrode mixture (negative electrode material) was prepared by adding 10 parts of polyvinylidene fluoride as a binding agent and an appropriate amount of N-methyl-2-pyrolidone as diluent solvent into 100 parts of each of the carbon materials obtained in the following examples, the comparative examples and the reference example and then mixing a resulting mixture. The prepared slurry negative electrode mixture was applied on both sides of a copper foil having a size of 18 μm, and then the slurry negative electrode mixture on the both sides of the copper foil was dried at a temperature of 110 °C for one hour. After the drying, the copper foil on which the negative electrode mixture was applied was compression-molded to obtain a compact. The negative electrode was produced by cutting the resulting compact into a circular shape having a diameter of 16.156 mm.
The positive electrode was produced by using a lithium metal. The electrolysis solution was prepared by dissolving 1 mol/liter of lithium perchlorate into a liquid mixture having a volume ratio of ethylene carbonate to diethyl carbonate of 1:1. A bipolar coin cell for evaluating the secondary battery was produced by using these components and then the following evaluation points of the bipolar coin cell were evaluated.

(2) Evaluations for charge capacity and discharge capacity

The bipolar coin cell was charged with constant current having current density of 25 mA/g until electrical potential of the bipolar coin cell became 1 mV and then the bipolar coin cell was kept in constant voltage of 1 mV. In this time, an amount of electricity charged into the bipolar coin cell until current density of the bipolar coin cell decayed to 1.25 mA/g was defined as the charge capacity. On the other hand, the charged bipolar coin cell was discharged with constant current having 25 mA/g. In this time, an amount of electricity discharged from the bipolar coin cell until the electrical potential of the bipolar coin cell became to 1.5 V (cut-off electrical potential) was defined as the discharge capacity.

(3) Evaluation for charge-discharge efficiency

A charge-discharge efficiency of the bipolar coin cell was calculated from the values obtained through the above evaluation (2) according to the following equation.

```
        Charge-discharge     efficiency    (%)    =    [the
  discharge capacity / the charge capacity] x 100
```

(4) Evaluation for capacity maintenance ratio after 60 cycles

Capacity maintenance ratio between the charge capacity obtained through the above evaluation (2) and a charge capacity of the bipolar coin cell after the repeated charge-discharge cycles of 60 times was calculated according to the following equation.

```
        Capacity maintenance ratio after 60 cycles (%)
    = [discharge capacity at the time of the sixtieth cycle /
     charge capacity at the time of the first cycle] x 100
```

The charge capacity and the discharge capacity of the bipolar coin cell after the second charge-discharge cycle were obtained as follows.

The bipolar coin cell was charged with constant current having current density of 250 mA/g until the electrical potential of the bipolar coin cell became 1 mV and then the bipolar coin cell was kept in the constant voltage of 1 mV. In this time, an amount of electricity charged into the bipolar coin cell until the current density of the bipolar coin cell decayed to 12.5 mA/g was defined as the charge capacity. On the other hand, the charged coin cell was discharged with constant current having 250 mA/g. In this time, an amount of electricity discharged from the bipolar coin cell until the electrical potential of the coin cell became to 1.5 V (cut-off electrical potential) was defined as the discharge capacity.

(5) Electrical characteristics at high current

Based on the charge capacity obtained through the above evaluation (2), a current value at the time of ending the discharging of the bipolar coin cell for one hour was defined as "1C". After that, a ratio between the a charge capacity obtained by discharging the bipolar coin cell with current having a current value of 1C and a discharge capacity obtained by discharging the bipolar coin cell with current having a current value of 5C was calculated (that is [5C discharge capacity / 1C discharge capacity]). The calculated ratio was defines as an evaluation index for the electrical characteristics at high current.

(6) Compaction ratio

After the carbon material was applied on the copper foil, the carbon material was pressed in a state that a load per unit area is 2 t/cm$^2$. In this time, a density ratio (compaction ratio) between densities of the carbon material layer before and after the pressing of the carbon material (that is $d_1/d_0$ when the density of the carbon material layer before the pressing is defined as "$d_0$" [g/cm$^3$] and the density of the carbon material layer after the pressing is defined as "$d_1$" [g/cm$^3$]) was obtained.

7. Particle size distribution

By using a laser diffraction type particle size distribution measurement apparatus "LA-920" made by Horiba Ltd., particle size distributions of a whole of particles forming the carbon material (the graphite particles and the hard carbon particles), the graphite particles and the hard carbon were measured. A cumulative distribution curve of whole of the particles forming the carbon material was obtained according the measurement results. After that, a particle size of the particle being at a 5% accumulation point on the cumulative distribution curve (D5), a particle size of the particle being at a 50% accumulation point on the cumulative distribution curve (D50) and a particle size of the particle being at a 95% accumulation point on the cumulative distribution curve (D95) were obtained. In the same manner, each of particle sizes of the particles respectively forming the graphite and the hard carbon being at 50% accumulation points on cumulative distribution curves (D50, that is an average particle size) was obtained.

8. Measurement of size and amount of pores

By using a pores distribution measurement apparatus "ASAP 2010" made by Shimadzu Corporation, a pore volume of the measurement sample was measured by obtaining an absorption isotherm thereof at 77 K by using nitrogen gas as measurement gas after heat-pretreatment under vacuum state. After that, the pore volume was calculated from the absorption isotherm at 77 K with a DH method. In this time, a sum volume of the particles having a diameter equal to or larger than 2 nm and smaller than 50 nm was defined as a volume of mesopores. A sum volume of the particles having a diameter equal to or larger than 50 nm was defined as a volume of macropores.

[2] Producing Carbon material and results

(Example 1A)

Hard carbon particles were obtained by treating a phenol resin "PR-217" (made by Sumitomo Bakelite Co., Ltd.) as the resin composition in the order of the following steps (a) to (f).
(a) The resin composition was treated under a condition that a treatment temperature was raised from room temperature to 500 °C at a rising rate of 100 °C/hour without reductive gas displacement, inactive gas displacement, reductive gas circulation and inactive gas circulation.
(b) The resin composition was degreased under a condition that a treatment temperature was kept at 500 °C for two hours without the reductive gas displacement, the inactive gas displacement, the reductive gas circulation and the inactive gas circulation. After the degreasing, the resin composition was cooled.
(c) The resin composition was finely pulverized with a vibratory ball mill.
(d) The resin composition was treated under a condition that a treatment temperature was raised from room temperature to 1200 °C at a rising rate of 100 °C/hour with the inactive gas (nitrogen) displacement and the inactive gas (nitrogen) circulation.
(e) The resin composition was carbonized at a temperature of 1200 °C for eight hours with the inactive gas (nitrogen) circulation.
(f) The resin composition was naturally cooled to 600 °C and then cooled from 600 °C to 100 °C at a cooling rate of 100 °C/hour.

The carbon material formed of the graphite particles and the hard carbon particles was obtained by mixing 100 parts by weight of the graphite particles (mesophase carbon maicrobead) and 43 parts by weight of the obtained hard carbon particles with a mortar.

(Examples 2A to 5A)

The carbon materials of the examples 2A to 5A were obtained in the same manner as the example 1A, except that the amounts of the graphite particles and the hard carbon particles contained in the carbon material were modified as shown in the following table 1.

(Example 6A)

An aniline resin synthesized according to the following method was used in substitution for the phenol resin in the example 1A.
100 parts of aniline, 697 parts of 37% formaldehyde aqueous solution and 2 parts of oxalic acid were charged into a three-neck flask with a stirrer and a cooling pipe, and then treated at 100 °C for three hours. After that, 110 parts of the aniline resin was obtained by dehydrating the reactant. A weight-average molecular weight of the obtained aniline resin was about 800.
The carbon material was obtained by treating a resin composition obtained by pulverizing and mixing 100 parts of the aniline resin obtained through the above steps and 10 parts of hexamethylenetetramine in the same manner as the example 1A.

(Example 7A)

The same resin composition as the example 6A was used.
The carbon material was obtained in the same manner as the example 6A, except that the steps (d) and (e) of the example 1A for treating the resin composition were modified as followings.
(d) The resin composition was treated under a condition that a treatment temperature was raised from room temperature to 1100 °C at a rising rate of 100 °C/hour with the inactive gas (nitrogen) displacement and the inactive gas (nitrogen) circulation.
(e) The resin composition was carbonized at a temperature of 1100 °C for eight hours with the inactive gas (nitrogen) circulation.

(Comparative example 1A)

A carbon material formed of graphite particles (mesophase carbon maicrobead) was prepared.

(Comparative example 2A)

A carbon material formed of the hard carbon particles of the example 1A was prepared.

The contained amount of the graphite particles, the contained amount of the hard carbon particles, the positron lifetime in the hard carbon, the XPS, the average surface separation, the crystallite size, the specific surface area, the contained amount of the carbon and the contained amount of the nitrogen of the carbon materials obtained in the examples and the comparative examples are shown in the table 1.

In addition, the charge capacities and the discharge capacities of the bipolar coin cells respectively having the negative electrodes formed by using the carbon materials obtained in the examples and the comparatives are shown in the table 1.

Table 1

Table 1

| | Contained amount of graphite particles A [wt%] | Hard carbon particles | | | | | | | | A/B | Charge capacity [mAh/g] | Discharge capacity [mAh/g] | Charge-discharge efficiency [%] | Capacity maintenance ratio after 60 cycles [%] | 5C discharge capacity / 1C discharge capacity |
| | | Contained amount B [wt%] | Positron lifetime [Ps] | XPS [eV] | $d_{002}$ [Å] | Lc [Å] | Specific surface are [m²/g] | Contained amount of carbon [wt%] | Contained amount of nitrogen [wt%] | | | | | | |
|---|---|---|---|---|---|---|---|---|---|---|---|---|---|---|---|
| Example 1A | 70 | 30 | 408 | 1.1 | 3.78 | 9.99 | 7 | 97.5 | 0.9 | 2.3 | 335 | 315 | 94 | 94 | 0.92 |
| Example 2A | 60 | 40 | 408 | 1.1 | 3.78 | 9.99 | 7 | 97.5 | 0.9 | 1.5 | 346 | 320 | 92 | 95 | 0.93 |
| Example 3A | 80 | 20 | 408 | 1.1 | 3.78 | 9.99 | 7 | 97.5 | 0.9 | 4.0 | 323 | 310 | 95 | 90 | 0.87 |
| Example 4A | 90 | 10 | 408 | 1.1 | 3.78 | 9.99 | 7 | 97.5 | 0.9 | 9.0 | 318 | 296 | 93 | 86 | 0.82 |
| Example 5A | 55 | 45 | 408 | 1.1 | 3.78 | 9.99 | 7 | 97.5 | 0.9 | 1.2 | 347 | 300 | 86 | 95 | 0.94 |
| Example 6A | 70 | 30 | 446 | 1.2 | 3.64 | 11.4 | 6 | 96.5 | 1.6 | 2.3 | 332 | 309 | 93 | 94 | 0.93 |
| Example 7A | 70 | 30 | 404 | 1.5 | 3.66 | 10.7 | 5 | 95.0 | 2.9 | 2.3 | 366 | 341 | 93 | 92 | 0.81 |
| Comparative Example 1A | 100 | - | - | - | - | - | - | - | - | - | 290 | 276 | 94 | 21 | 0.57 |
| Comparative Example 2A | - | 100 | 408 | 1.1 | 3.78 | 9.99 | 7 | 97.5 | 0.9 | - | 483 | 377 | 78 | 97 | 0.97 |

EP 2 755 262 A1

As is clear from the table 1, the lithium ion secondary batteries using the carbon materials formed of the graphite particles and the hard carbon particles as the additive can provide high charge-discharge efficiency, superior stability during the repeated charge-discharge cycles and superior input-output characteristics at high current. In contrast, the lithium secondary batteries of the comparative examples cannot provide sufficient results.

(Example 1B)

Hard carbon particles were obtained by treating a phenol resin "PR-217" (made by Sumitomo Bakelite Co., Ltd.) as the resin composition in the order of the following steps (a) to (f).
(a) The resin composition was treated under a condition that a treatment temperature was raised from room temperature to 500 °C at a rising rate of 100 °C/hour without reductive gas displacement, inactive gas displacement, reductive gas circulation and inactive gas circulation.
(b) The resin composition was degreased under a condition that a treatment temperature was kept at 500 °C for two hours without the reductive gas displacement, the inactive gas displacement, the reductive gas circulation and the inactive gas circulation. After the degreasing, the resin composition was cooled.
(c) The resin composition was finely pulverized with a vibratory ball mill.
(d) The resin composition was treated under a condition that a treatment temperature was raised from room temperature to 1200 °C at a rising rate of 100 °C/hour with the inactive gas (nitrogen) displacement and the inactive gas (nitrogen) circulation.
(e) The resin composition was carbonized at a temperature of 1200 °C for eight hours with the inactive gas (nitrogen) circulation.
(f) The resin composition was naturally cooled to 600 °C and then cooled from 600 °C to 100 °C at a cooling rate of 100 °C/hour.

The carbon material formed of the graphite particles and the hard carbon particles was obtained by mixing 100 parts by weight of the graphite particles (mesophase carbon maicrobead) and 43 parts by weight of the obtained hard carbon particles with a mortar.

(Example 2B)

The carbon material was obtained in the same manner as the example 1B, except that the amounts of the graphite particles and the hard carbon particles in the carbon material were modified as shown in the following table 2.

(Example 3B)

The carbon material was obtained in the same manner as the example 1B, except that the condition of the step (c) was modified so that "D50" of the hard carbon particle became 2.

(Example 4B)

The carbon material was obtained in the same manner as the example 3B, except that the amounts of the graphite particles and the hard carbon particles in the carbon material were modified as shown in the table 2.

(Example 5B)

An aniline resin synthesized according to the following method was used in substitution for the phenol resin in the example 1B.
100 parts of aniline, 697 parts of 37% formaldehyde aqueous solution and 2 parts of oxalic acid were charged into a three-neck flask with a stirrer and a cooling pipe, and then treated at 100 °C for three hours. After that, 110 parts of the aniline resin was obtained by dehydrating the reactant. A weight-average molecular weight of the obtained aniline resin was about 800.
The carbon material was obtained by treating a resin composition obtained by pulverizing and mixing 100 parts of the aniline resin obtained through the above steps and 10 parts of hexamethylenetetramine in the same manner as the example 1B.

(Example 6B)

The carbon material was obtained in the same manner as the example 5B, except that the amounts of the graphite particles and the hard carbon particles in the carbon material were modified as shown in table 2.

(Example 7B)

The same resin composition as the example 5B was used.

The carbon material was obtained in the same manner as the example 5B, except that the steps (d) and (e) of the example 1B for treating the resin composition were modified as followings.

(d) The resin composition was treated under a condition that a treatment temperature was raised from room temperature to 1100 °C at a rising rate of 100 °C/hour with the inactive gas (nitrogen) displacement and the inactive gas (nitrogen) circulation.

(e) The resin composition was carbonized at a temperature of 1100 °C for eight hours with the inactive gas (nitrogen) circulation.

(Example 8B)

The carbon material was obtained in the same manner as the example 7B, except that the amounts of the graphite particles and the hard carbon particles in the carbon material were modified as shown in the table 2.

(Comparative example 1B)

The same resin composition as the example 1B was used.

A carbon material was formed of only the hard carbon particles without being mixed with the graphite particles. The hard carbon particles were obtained in the same manner as the example 1B, except that the hard carbon particles were finely pulverized with the vibratory ball mill of the step (c) of the example 1B so that a value of "D50" became a value in the table 2.

(Reference example)

A hard carbon formed of the graphite particles and the hard carbon particles was obtained by mixing 100 parts by weight of the same hard carbon particles as the example 1B and 150 parts by weight of the graphite particles (mesophase carbon maicrobead) with a mortar.

(Comparative examples 2B and 3B)

Carbon materials of the examples 2B and 3B were formed of only the hard carbon particles in the same manner as the example 1B without being mixed with the graphite particles, except that the hard carbon particles was sieved so that values of "D50" and D95/D5 became values in the table 2.

Values of "D50", "D5" and "D95" of whole of the particles forming the carbon material, Values of "D50", "D5" and "D95" of each of the graphite particles and the hard carbon particles, the contained amount of the graphite particles, the contained amount of the hard carbon particles, the positron lifetime in the hard carbon, the XPS, the average surface separation, the crystallite size, the specific surface area, the contained amount of the carbon and the contained amount of the nitrogen of the carbon materials obtained in the examples, the comparative examples and the reference example are shown in the table 2.

In addition, the charge capacities, the discharge capacities and the like of the bipolar coin cells respectively having the negative electrodes formed by using the carbon materials obtained in the examples, the comparatives and the reference example are shown in the table 3.

Table 2

Table 2

| | Graphite particles | | Hard carbon particles | | | | | | | | | A/B | D50 [μm] | D5 [μm] | D95 [μm] | D95/D5 |
|---|---|---|---|---|---|---|---|---|---|---|---|---|---|---|---|---|
| | D50 [μm] | Contained amount A [wt%] | D50 [μm] | Contained amount B [wt%] | Positron lifetime [Ps] | XPS [eV] | $d_{002}$ [Å] | Lc [Å] | Specific surface area [m²/g] | Contained amount of carbon [wt%] | Contained amount of nitrogen [wt%] | | | | | |
| Example 1B | 13 | 70 | 10 | 30 | 408 | 1.1 | 3.78 | 9.99 | 7 | 97.5 | 0.9 | 2.3 | 12 | 2.0 | 26 | 13 |
| Example 2B | 13 | 80 | 10 | 20 | 408 | 1.1 | 3.78 | 9.99 | 7 | 97.5 | 0.9 | 4.0 | 12 | 3.0 | 25 | 8.3 |
| Example 3B | 13 | 70 | 2 | 30 | 408 | 1.1 | 3.78 | 9.99 | 15 | 97.5 | 0.9 | 2.3 | 9.6 | 1.9 | 23 | 12 |
| Example 4B | 13 | 55 | 2 | 45 | 408 | 1.1 | 3.78 | 9.99 | 15 | 97.5 | 0.9 | 1.2 | 5.5 | 1.1 | 23 | 21 |
| Example 5B | 13 | 70 | 10 | 30 | 446 | 1.2 | 3.64 | 11.4 | 6 | 96.5 | 1.6 | 2.3 | 12 | 2.6 | 24 | 9.2 |
| Example 6B | 13 | 60 | 10 | 40 | 446 | 1.2 | 3.64 | 11.4 | 6 | 96.5 | 1.6 | 1.5 | 11 | 3.0 | 23 | 7.7 |
| Example 7B | 13 | 70 | 10 | 30 | 404 | 1.5 | 3.66 | 10.7 | 5 | 95.0 | 2.9 | 2.3 | 12 | 2.6 | 26 | 10 |
| Example 8B | 13 | 60 | 10 | 40 | 404 | 1.5 | 3.66 | 10.7 | 5 | 95.0 | 2.9 | 1.5 | 12 | 2.3 | 27 | 12 |
| Comparative Example 1B | - | - | 0.7 | 100 | 408 | 1.1 | 3.78 | 9.99 | 31 | 97.5 | 0.9 | - | 0.7 | 0.4 | 1.2 | 3.0 |
| Reference Example | 13 | 60 | 0.7 | 40 | 408 | 1.1 | 3.78 | 9.99 | 31 | 97.5 | 0.9 | 1.5 | 7.3 | 0.6 | 23 | 38 |
| Comparative Example 2B | - | - | 61 | 100 | 408 | 1.1 | 3.78 | 9.99 | 4 | 97.5 | 0.9 | - | 61 | 6.8 | 116 | 17 |
| Comparative Example 3B | - | - | 11 | 100 | 408 | 1.1 | 3.78 | 9.99 | 7 | 97.5 | 0.9 | - | 11 | 7.9 | 15 | 1.9 |

Table 3

Table 3

|  | Charge capacity [mAh/g] | Discharge capacity [mAh/g] | Charge-discharge efficiency [%] | Capacity maintenance ratio after 60 cycles [%] | 5C discharge capacity / 1C discharge capacity | Compaction ratio |
|---|---|---|---|---|---|---|
| Example 1B | 335 | 315 | 94 | 94 | 0.92 | 1.2 |
| Example 2B | 323 | 310 | 95 | 90 | 0.87 | 1.2 |
| Example 3B | 343 | 312 | 91 | 90 | 0.90 | 1.3 |
| Example 4B | 364 | 332 | 91 | 91 | 0.91 | 1.4 |
| Example 5B | 332 | 309 | 93 | 94 | 0.93 | 1.3 |
| Example 6B | 351 | 322 | 92 | 94 | 0.94 | 1.2 |
| Example 7B | 366 | 341 | 93 | 92 | 0.81 | 1.3 |
| Example 8B | 378 | 340 | 90 | 93 | 0.86 | 1.3 |
| Comparative Example 1B | 382 | 297 | 78 | 86 | 0.74 | 1.9 |
| Reference Example | 371 | 281 | 76 | 86 | 0.68 | 1.7 |
| Comparative Example 2B | 321 | 240 | 78 | 83 | 0.81 | 1.1 |
| Comparative Example 3B | 357 | 257 | 72 | 95 | 0.94 | 1.2 |

As is clear from the tables, the lithium ion secondary batteries of the present invention having the values of "D50" and D95/D5 being respectively in the predetermined ranges can provide superior results. In contrast, the lithium secondary batteries of the comparative examples cannot provide sufficient results.

(Example 1C)

Porous hard carbon particles were obtained by treating a phenol resin "PR-217" (made by Sumitomo Bakelite Co., Ltd.) as the resin composition in the order of the following steps (a) to (f).
(a) The resin composition was treated under a condition that a treatment temperature was raised from room temperature to 500 °C at a rising rate of 100 °C/hour without reductive gas displacement, inactive gas displacement, reductive gas circulation and inactive gas circulation.
(b) The resin composition was degreased under a condition that a treatment temperature was kept at 500 °C for two hours without the reductive gas displacement, the inactive gas displacement, the reductive gas circulation and the inactive gas circulation. After the degreasing, the resin composition was cooled.
(c) The resin composition was finely pulverized with a vibratory ball mill.
(d) The resin composition was treated under a condition that a treatment temperature was raised from room temperature to 1200 °C at a rising rate of 100 °C/hour with the inactive gas (nitrogen) displacement and the inactive gas (nitrogen) circulation.
(e) The resin composition was carbonized at a temperature of 1200 °C for eight hours with the inactive gas (nitrogen) circulation.
(f) The resin composition was naturally cooled to 600 °C and then cooled from 600 °C to 100 °C at a cooling rate of 100 °C/hour.

The carbon material formed of the porous graphite particles and the porous hard carbon particles was obtained by mixing 100 parts by weight of the porous graphite particles (mesophase carbon maicrobead) and 43 parts by weight of the obtained porous hard carbon particles with a mortar.

(Examples 2C and 3C)

The carbon materials of the examples 2C and 3C were obtained in the same manner as the example 1C, except that the amounts of the porous graphite particles and the porous hard carbon particles were modified as shown in the following table 4.

(Example 4C)

The same resin composition as the example 1C was used.
The carbon material was obtained in the same manner as the example 1C, except that the step (c) of the example 1C for treating the resin composition was modified as followings.

(c) The resin composition was finely pulverized with a bead mill.

(Example 5C)

An aniline resin synthesized according to the following method was used in substitution for the phenol resin in the example 1C.
100 parts of aniline, 697 parts of 37% formaldehyde aqueous solution and 2 parts of oxalic acid were charged into a three-neck flask with a stirrer and a cooling pipe, and then treated at 100 °C for three hours. After that, 110 parts of the aniline resin was obtained by dehydrating the reactant. A weight-average molecular weight of the obtained aniline resin was about 800.
The porous hard carbon particles was obtained by treating a resin composition obtained by pulverizing and mixing 100 parts of the aniline resin obtained through the above steps and 10 parts of hexamethylenetetramine in the same manner as the example 1C. After that, the hard carbon formed of the porous graphite particles and the porous hard carbon particles was obtained by mixing 100 parts by weight of the porous graphite particles (mesophase carbon maicrobead) and 67 parts by weight of the obtained porous hard carbon particles with a mortar.

(Example 6C)

The same resin composition as the example 5C was used.
The carbon material was obtained in the same manner as the example 5C, except that the steps (d) and (e) of the example 1C for treating the resin composition were modified as followings.
(d) The resin composition was treated under a condition that a treatment temperature was raised from room temperature to 1100 °C at a rising rate of 100 °C/hour with the inactive gas (nitrogen) displacement and the inactive gas (nitrogen) circulation.
(e) The resin composition was carbonized at a temperature of 1100 °C for eight hours with the inactive gas (nitrogen) circulation.

The hard carbon formed of the porous graphite particles and the porous hard carbon particles was obtained by mixing 100 parts by weight of the porous graphite particles (mesophase carbon maicrobead) and 43 parts by weight of the obtained porous hard carbon particles with a mortar.

(Comparative example 1C)

Porous graphite particles (mesophase carbon maicrobead) was prepared and used as a carbon material.

(Comparative example 2C)

A carbon material was formed of only the porous hard carbon particles obtained in the same manner as the example 4C without being mixed with the porous graphite particles.

(Comparative example 3C)

The same resin composition as the example 1C was used.
The carbon material was obtained in the same manner as the example 1C, except that the steps (d) and (e) of the example 1C for treating the resin composition were modified as followings.

(d) The resin composition was treated under a condition that a treatment temperature was raised from room temperature to 1000 °C at a rising rate of 100 °C/hour with the inactive gas (nitrogen) displacement and the inactive gas (nitrogen) circulation.

(e) The resin composition was carbonized at a temperature of 1000 °C for eight hours with the inactive gas (nitrogen) circulation.

A carbon material was formed of only the obtained porous hard carbon particles without being mixed with the porous graphite particles.

The volume ratio of the total volume of the mesopores relative to the total volume of the pores of whole of the particles forming the carbon material, the volume ratio of the total volume of the macropores relative to the total volume of the pores, the volume ratio of the sum of the total volume of the mesopores and the total volume of the macropores relative to the total volume of the pores, the volume of the mesopores per unit weight of whole of the particles, the contained amount of the graphite particles, the contained amount of the hard carbon particles, the positron lifetime in the hard carbon, the XPS, the average surface sepbipolararation, the crystallite size, the specific surface area, the contained amount of the carbon and the contained amount of the nitrogen of the carbon materials obtained in the examples and the comparative examples are shown in the table 4.

In the table 4, the volume ratio of the total volume of the mesopores relative to the total volume of the pores is defined as "R1", the volume ratio of the total volume of the macropores relative to the total volume of the pores is defined as "R2", the volume ratio of the sum of the total volume of the mesopores and the total volume of the macropores relative to the total volume of the pores is defined as "R1+R2", the volume of the macropores per unit weight of whole of the particles is defined as "X" and the volume of the mesopores per unit weight of whole of the particle is defined as "Y".

In addition, the charge capacities, the discharge capacities and the like of the bipolar coin cells respectively having the negative electrodes formed by using the carbon materials obtained in the examples and the comparatives are shown in the table 5.

Table 4

Table 4

| | Graphite particles | Hard carbon particles | | | | | | | | A/B | R1 [%] | R2 [%] | R1+R2 [%] | X [mL/g] | Y [mL/g] |
| | Contained amount A [wt%] | Contained amount B [wt%] | Positron lifetime [Ps] | XPS [eV] | $d_{002}$ [Å] | Lc [A] | Specific surface area [m2/g] | Contained amount of carbon [wt%] | Contained amount of nitrogen [wt%] | | | | | | |
|---|---|---|---|---|---|---|---|---|---|---|---|---|---|---|---|
| Example 1C | 70 | 30 | 408 | 1.1 | 3.78 | 9.99 | 7 | 97.5 | 0.9 | 2.3 | 38 | 54 | 92 | 0.007 | 0.005 |
| Example 2C | 60 | 40 | 408 | 1.1 | 3.78 | 9.99 | 7 | 97.5 | 0.9 | 1.5 | 38 | 54 | 92 | 0.008 | 0.006 |
| Example 3C | 90 | 10 | 408 | 1.1 | 3.78 | 9.99 | 7 | 97.5 | 0.9 | 9.0 | 38 | 55 | 93 | 0.005 | 0.004 |
| Example 4C | 70 | 30 | 408 | 1.1 | 3.78 | 9.99 | 15 | 97.5 | 0.9 | 2.3 | 38 | 47 | 85 | 0.007 | 0.008 |
| Example 5C | 60 | 40 | 446 | 1.2 | 3.64 | 11.4 | 6 | 96.5 | 1.6 | 2.3 | 37 | 54 | 92 | 0.008 | 0.005 |
| Example 6C | 70 | 30 | 404 | 1.5 | 3.66 | 10.7 | 5 | 95.0 | 2.9 | 2.3 | 38 | 55 | 93 | 0.010 | 0.007 |
| Comparative Example 1C | 100 | - | - | - | - | - | - | - | - | - | 38 | 55 | 93 | 0.004 | 0.003 |
| Comparative Example 2C | - | 100 | 408 | 1.1 | 3.78 | 9.99 | 15 | 97.5 | 0.9 | - | 48 | 28 | 75 | 0.014 | 0.019 |
| Comparative Example 3C | - | 100 | 367 | 1.5 | 3.83 | 8.67 | 12 | 96.0 | 1.0 | - | 34 | 59 | 92 | 0.039 | 0.023 |

Table 5

Table 5

| | Charge capacity [mAh/g] | Discharge capacity [mAh/g] | Charge-discharge efficiency [%] | Capacity maintenance ratio after 60 cycles [%] | 5C discharge capacity / 1C discharge capacity | Compaction ratio |
|---|---|---|---|---|---|---|
| Example 1C | 335 | 315 | 94 | 94 | 0.92 | 1.2 |
| Example 2C | 346 | 320 | 92 | 95 | 0.93 | 1.3 |
| Example 3C | 318 | 296 | 93 | 86 | 0.82 | 1.2 |
| Example 4C | 343 | 312 | 91 | 90 | 0.90 | 1.3 |
| Example 5C | 351 | 322 | 92 | 94 | 0.94 | 1.2 |
| Example 6C | 366 | 341 | 93 | 92 | 0.81 | 1.3 |
| Comparative Example 1C | 290 | 276 | 94 | 21 | 0.57 | 1.1 |
| Comparative Example 2C | 341 | 271 | 80 | 93 | 0.93 | 1.6 |
| Comparative Example 3C | 481 | 327 | 68 | 61 | 0.78 | 1.3 |

As is clear from the tables, the present invention having the volume ratio of the sum of the total volume of the mesopores and the total volume of the macropores relative to the total volume of the pores and the volume of the macropores per unit weight of whole of the particles being respectively in the predetermined ranges can provide superior results. In contrast, the lithium secondary batteries of the comparative examples cannot provide sufficient results.

## INDUSTRIAL APPLICABILITY

According to the present invention, it is possible to provide a carbon material for a lithium ion secondary battery, a negative electrode material for a lithium ion secondary battery and a lithium ion secondary battery, which can provide high charge-discharge capacity and superior charge-discharge efficiency in good balance because the carbon material of the present invention contain a graphite as a major component thereof and a hard carbon. For the reasons stated above, the present invention is industrially applicable.

## Claims

1. A carbon material for a lithium ion secondary battery, comprising:

   a graphite as a major component of the carbon material; and
   a hard carbon,
   wherein when an amount of the graphite contained in the carbon material is defined as "A" [wt%] and an amount of the hard carbon contained in the carbon material is defined as "B" [wt%], "A" and "B" satisfy a relationship of $1.2 \leq A/B \leq 19$ and the amount of the graphite contained in the carbon material is in the range of 55 to 95 wt%.

2. The carbon material for the lithium ion secondary battery claimed in claim 1, wherein the amount of the hard carbon contained in the carbon material is in the range of 5 to 45 wt%.

3. The carbon material for the lithium ion secondary battery claimed in claim 1, wherein the carbon material is formed of a plurality of particles, and
   wherein when a volume-based cumulative distribution curve of the particles forming the carbon material is obtained by accumulating the particles from the particle having the smallest volume and then a particle size of the particle being at a 5% accumulation point on the cumulative distribution curve is defined as "D5", a particle size of the particle being at a 50% accumulation point on the cumulative distribution curve is defined as "D50" and a particle size of the particle being at a 95% accumulation point on the cumulative distribution curve is defined as "D95", "D50" is in the range of 1.0 to 50 $\mu$m and "D50" and "D95" satisfy a relationship of $2.0 \leq$ D95/D5 $\leq 30$.

4. The carbon material for the lithium ion secondary battery claimed in claim 3, wherein each of the graphite and the hard carbon is formed of a plurality of particles, and
wherein when volume-based cumulative distribution curves of the particles respectively forming the graphite and the hard carbon are obtained by accumulating the particles from the particle having the smallest volume, a particle size of the particle forming the graphite and being at a 50% accumulation point on the cumulative distribution curve is in the range of 5 to 50 $\mu$m and a particle size of the particle forming the hard carbon and being at 50% accumulation point on the cumulative distribution curve is in the range of 1 to 50 $\mu$m.

5. The carbon material for the lithium ion secondary battery claimed in claim 1, wherein the carbon material is constituted of a porous body having pores including mesopores and macropores,
wherein a volume ratio of a sum of a total volume of the mesopores of the porous body and a total volume of the macropores of the porous body relative to a total volume of the pores of the porous body is in the range of 80 to 98%, and
wherein a volume of the macropores per unit weight of the porous body is in the range of 0.005 to 0.030 ml/g.

6. The carbon material for the lithium ion secondary battery claimed in claim 5, whrein a volume of the mesoprous per unit weight of the porous body is in the range of 0.001 to 0.025 ml/g.

7. The carbon material for the lithium ion secondary battery claimed in claim 1, wherein a positron lifetime of the hard carbon measured by a positron annihilation method under the following conditions (A) to (E) is in the range of 370 to 480 picoseconds, and

(A) positron source: a positron is generated from electron-positron pair with an electron accelerator.
(B) gamma-ray detector: a BaF$_2$-scintillator detector and a photomultiplier are used as the gamma-ray detector.
(C) measurement temperature and atmosphere: a measurement temperature is 25 °C and atmosphere is vacuum state.
(D) count number of annihilation gamma-rays: a count number of annihilation gamma-rays is equal to or larger than 3 x 10$^6$.
(E) energy of positron beam: energy of positron beam is 10 keV.
wherein a half-value width of a peak of the carbon material obtained by X-ray photoelectron spectroscopy (XPS) method and existing in the vicinity of 285 eV is in the range of 0.8 eV to 1.8 eV.

8. A negative electrode material for a lithium ion secondary battery, comprising:
the carbon material for the lithium ion secondary battery defined in claim 1.

9. A lithium ion secondary battery, comprising:

a negative electrode containing the negative electrode material defined in claim 8.

FIG. 1

FIG. 2

### INTERNATIONAL SEARCH REPORT

| | International application No. |
|---|---|
| | PCT/JP2012/072966 |

A. CLASSIFICATION OF SUBJECT MATTER
*H01M4/587*(2010.01)i, *C01B31/02*(2006.01)i, *H01M4/36*(2006.01)i

According to International Patent Classification (IPC) or to both national classification and IPC

B. FIELDS SEARCHED

Minimum documentation searched (classification system followed by classification symbols)
H01M4/00-4/62, C01B31/02

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 11-250909 A (Sanyo Electric Co., Ltd.),<br>17 September 1999 (17.09.1999),<br>claim 1; paragraphs [0005] to [0007], [0017]<br>to [0026]; table 1; fig. 1<br>(Family: none) | 1-4,8-9<br>5-6<br>7 |
| X<br>Y<br>A | JP 7-192724 A (Sony Corp.),<br>28 July 1995 (28.07.1995),<br>claims 1 to 11; paragraphs [0013] to [0015],<br>[0089] to [0092], [0097], [0108] to [0113],<br>[0118]; tables 1 to 3<br>& US 5451477 A        & EP 0627777 A3<br>& DE 69422854 D | 1-4,8-9<br>5-6<br>7 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>26 September, 2012 (26.09.12) | Date of mailing of the international search report<br>09 October, 2012 (09.10.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/072966

C (Continuation). DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2005-209591 A (Sanyo Electric Co., Ltd.),<br>04 August 2005 (04.08.2005),<br>claims 1 to 5; paragraphs [0009] to [0025],<br>[0044] to [0059]<br>(Family: none) | 1-4,8-9<br>5-6<br>7 |
| X<br>Y<br>A | JP 2009-032575 A (GS Yuasa Corp.),<br>12 February 2009 (12.02.2009),<br>paragraphs [0047] to [0054], [0074] to [0075];<br>table 4<br>(Family: none) | 1-4,8-9<br>5-6<br>7 |
| X<br>Y<br>A | JP 2002-270159 A (Sony Corp.),<br>20 September 2002 (20.09.2002),<br>claims 1 to 2; paragraphs [0067] to [0074];<br>table 1<br>(Family: none) | 1-2,8-9<br>3-6<br>7 |
| X<br>Y<br>A | JP 2008-091249 A (Sanyo Electric Co., Ltd.),<br>17 April 2008 (17.04.2008),<br>claims 1 to 3; paragraphs [0053] to [0072]<br>(Family: none) | 1-2,8-9<br>5-6<br>3-4,7 |
| Y | JP 2000-348726 A (Hitachi Powdered Metals Co.,<br>Ltd.),<br>15 December 2000 (15.12.2000),<br>claims 1 to 3; paragraphs [0008], [0013] to<br>[0014]; tables 1 to 4<br>& DE 10012963 A1 | 3-6 |
| Y | JP 2010-205827 A (Asahi Kasei Corp.),<br>16 September 2010 (16.09.2010),<br>claim 3; paragraphs [0033] to [0034]; table 1<br>(Family: none) | 5-6 |
| Y | JP 2007-311180 A (Teijin Ltd.),<br>29 November 2007 (29.11.2007),<br>paragraphs [0031], [0035]<br>(Family: none) | 5-6 |
| A | JP 2008-041402 A (Toshiba Corp.),<br>21 February 2008 (21.02.2008),<br>entire text<br>& US 2008/0176142 A1    & EP 2057710 A1<br>& WO 2008/015987 A1 | 5-6 |
| A | JP 2004-259629 A (Nisshinbo Industries, Inc.),<br>16 September 2004 (16.09.2004),<br>entire text<br>(Family: none) | 7 |

Form PCT/ISA/210 (continuation of second sheet) (July 2009)

**INTERNATIONAL SEARCH REPORT**

International application No.

PCT/JP2012/072966

C (Continuation). DOCUMENTS CONSIDERED TO BE RELEVANT

| Category* | Citation of document, with indication, where appropriate, of the relevant passages | Relevant to claim No. |
|---|---|---|
| P,A | JP 2011-198690 A (Sumitomo Bakelite Co., Ltd.), 06 October 2011 (06.10.2011), entire text (Family: none) | 7 |
| P,A | JP 2012-156042 A (Sumitomo Bakelite Co., Ltd.), 16 August 2012 (16.08.2012), entire text (Family: none) | 7 |

Form PCT/ISA/210 (continuation of second sheet) (July 2009)

## INTERNATIONAL SEARCH REPORT

International application No.

PCT/JP2012/072966

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
    See extra sheet.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2012/072966

<u>Continuation of Box No.III of continuation of first sheet(2)</u>

Document 1: JP 11-250909 A (Sanyo Electric Co., Ltd.), 17 September 1999 (17.09.1999), claim 1, paragraphs [0005] to [0007], [0017] to [0026], table 1, fig. 1

Document 2: JP 7-192724 A (Sony Corp.), 28 July 1995 (28.07.1995), claims 1 to 11, paragraphs [0013] to [0015], [0089] to [0092], [0097], [0108] to [0113], [0118], tables 1 to 3

Document 3: JP 2005-209591 A (Sanyo Electric Co., Ltd.), 04 August 2005 (04.08.2005), claims 1 to 5, paragraphs [0009] to [0025], [0044] to [0059]

Document 4: JP 2009-032575 A (GS Yuasa Corp.), 12 February 2009 (12.02.2009), paragraphs [0047] to [0054], [0074] to [0075], table 4

Document 5: JP 2002-270159 A (Sony Corp.), 20 September 2002 (20.09.2002), claims 1 to 2, paragraphs [0067] to [0074], table 1

Document 6: JP 2008-091249 A (Sanyo Electric Co., Ltd.), 17 April 2008 (17.04.2008), claims 1 to 3, paragraphs [0053] to [0072]

Documents 1-6 set forth "a carbon material for lithium ion secondary batteries, which contains graphite and hard carbon and satisfies the relation of $1.2 \leq A/B \leq 19$ when the content of graphite is represented by A (% by weight) and the content of hard carbon is represented by B (% by weight), with the content of graphite being from 55% by weight to 95% by weight (inclusive)". Consequently, the invention of claim 1 cannot be considered novel over the invention set forth in documents 1-6, and does not have a special technical feature.

Therefore, it is obvious that a group of inventions set forth in claims 1-9 do not comply with the requirement of unity of invention.

Form PCT/ISA/210 (extra sheet) (July 2009)

**EP 2 755 262 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H0574457 A
- JP 2006083012 A